(19) Europäisches Patentamt
European Patent Office
Office européen des brevets

(11) EP 3 919 564 A1

# (12) EUROPÄISCHE PATENTANMELDUNG

(43) Veröffentlichungstag:
**08.12.2021 Patentblatt 2021/49**

(21) Anmeldenummer: **21172195.6**

(22) Anmeldetag: **05.05.2021**

(51) Int Cl.:
***C08L 77/02*** *(2006.01)* ***C08K 3/32*** *(2006.01)*
***C08K 5/18*** *(2006.01)* ***C08K 5/3492*** *(2006.01)*
***C08K 5/5313*** *(2006.01)* ***C08L 77/06*** *(2006.01)*

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **02.06.2020 EP 20177772**

(71) Anmelder: **LANXESS Deutschland GmbH
50569 Köln (DE)**

(72) Erfinder:
- **ENDTNER, Jochen
50679 Köln (DE)**
- **KOERTE, Leif,Arne
41468 Neuss (DE)**
- **GAU, Elisabeth
41541 Dormagen (DE)**
- **BIENMÜLLER, Matthias
47803 Krefeld (DE)**
- **JOACHIMI, Detlev
47800 Krefeld (DE)**

## (54) POLYAMID BASIERTE ERZEUGNISSE

(57) Die vorliegende Erfindung betrifft flammgeschützte, farbstabile und schlagzähe Polyamid basierte Erzeugnisse sowie die Verwendung von Mischungen enthaltend wenigstens ein sekundäres aromatisches Amin sowie wenigstens ein Phosphinsäurederivat als Additiv zur Verbesserung des Alterungsverhaltens in Form eines verbesserten Farberhalts bzw. einer verbesserten Farbstabilität im Vergleich zu flammwidrigen Polyamid basierten Erzeugnissen ohne diese Mischung.

EP 3 919 564 A1

**Beschreibung**

Die vorliegende Erfindung betrifft flammgeschützte, farbstabile und schlagzähe Polyamid basierte Erzeugnisse sowie die Verwendung von Mischungen enthaltend wenigstens ein sekundäres aromatisches Amin sowie wenigstens ein Phosphinsäurederivat als Additiv zur Verbesserung des Alterungsverhaltens in Form eines verbesserten Farberhalts bzw. einer verbesserten Farbstabilität im Vergleich zu flammwidrigen Polyamid basierten Erzeugnissen ohne diese Mischung.

Polyamide sind aufgrund ihrer guten mechanischen Stabilität, ihrer chemischen Beständigkeit und der guten Verarbeitbarkeit gerade auch im Bereich der Elektro- und Elektronikbauteile ein wichtiger thermoplastischer Werkstoff. Allerdings stellen gerade Anwendungen im Elektro- und Elektronikbereich sehr häufig erhöhte Anforderungen an die Flammwidrigkeit, weswegen die dort eingesetzten Polyamide häufig mit Flammschutzmitteln ausgerüstet werden müssen. Die dafür infrage kommenden halogenhaltigen Flammschutzmittel werden dabei in jüngerer Zeit aus technischen Gründen aber auch aufgrund von Vorbehalten in der Öffentlichkeit zunehmend durch halogenfreie Alternativen zum Beispiel auf Basis organischer Phosphorverbindungen oder auch auf Basis stickstoffhaltiger Flammschutzmittel ersetzt. Der Einsatz von Flammschutzmitteln führt jedoch nicht selten zu einer Verringerung der mechanischen Eigenschaften, insbesondere der Schlagzähigkeit.

Polyamide bilden auch seit vielen Jahren einen wichtigen Bestandteil zur Fertigung anspruchsvoller Kraftfahrzeugkomponenten. Während bisher der Verbrennungsmotor das dominierende Antriebskonzept darstellte, ergeben sich im Zuge der Suche nach alternativen Antriebskonzepten auch neue Anforderungen hinsichtlich der Materialauswahl. Eine wesentliche Rolle spielt dabei die Elektromobilität, bei welcher der Verbrennungsmotor in Hybridfahrzeugen teilweise oder in Elektromobilen vollständig durch einen oder mehrere Elektromotoren ersetzt wird, die ihre elektrische Energie typischerweise aus Batterien oder Brennstoffzellen beziehen. Während konventionelle Fahrzeuge mit Verbrennungsmotor als alleinigem Antrieb typischerweise mit einem Bordspannungsnetz von 12V auskommen, werden in Hybrid- und Elektrofahrzeugen mit Elektromotoren als Antriebseinheit wesentlich höhere Spannungen benötigt. Dies stellt für den direkten Bereich und die unmittelbare Umgebung von derartig hochspannungsführenden Komponenten ein ernstzunehmendes zusätzliches Gefahrenpotential dar, was in technischen Spezifikationen oder auch normativ zunehmend von Bedeutung ist. Eine wichtige Rolle spielt dabei neben den erhöhten Anforderungen an den Flammschutz auch die eindeutige Kennzeichnung dieser Hochvolt Gefährdungsbereiche, um auf diese Weise einen unbeabsichtigten Kontakt mit einem Menschen, insbesondere Fahrer oder Mechaniker, zu vermeiden, wobei wiederum die eindeutige farbliche Kennzeichnung, insbesondere die farbliche Kennzeichnung in orange, von Polyamid basierten Erzeugnissen in Hochvoltanwendungen eine besonders wichtige Rolle spielt. Die deutsche gesetzliche Unfallversicherung DGUV beschreibt in ihrer Information BGI / GUV-I 8686 zur "Qualifizierung für Arbeiten an Fahrzeugen mit Hochvoltsystemen" den Begriff Hochvolt, insbesondere bei Hybrid- und Brennstoffzellentechnologie sowie Elektrofahrzeugen, umfassend Spannungen >60 V und <1500V für Gleichspannungsbereich und >30V und <1000V für Wechselspannung.

Allerdings unterliegen Polyamid basierte Erzeugnisse bei Einwirkung äußerer Einflüsse, insbesondere von Licht, UV-Strahlen, Wärme oder widrigen Wetterbedingungen, Abbauerscheinungen. Abbauerscheinungen treten insbesondere infolge des Einwirkens erhöhter Temperaturen auf. Das Ergebnis solcher Abbauerscheinungen wird dabei insbesondere durch Verfärbungen der Polyamidkomponenten wahrgenommen. Gerade aber die Abbauprozesse in Form unerwünschter Verfärbungen sind im Falle flammwidriger, eingefärbter Polyamid basierter Erzeugnisse, insbesondere orange eingefärbter Polyamid basierter Erzeugnisse im Hochvoltbereich unerwünscht, da eine eindeutige und weitestgehend gleichbleibende farbliche Kennzeichnung über die Einsatzdauer, z.B. in Kraftfahrzeugen, nicht mehr gewährleistet wäre.

Während an Polyamide bei Anwendungen im Automobilbereich schon immer hohe Anforderungen an die Mechanik, insbesondere die Schlagzähigkeit gestellt wurden, kommen beim Einsatz in der E-Mobilität, insbesondere im Hochvoltbereich wie z.B. bei Ladesteckern, also aufgrund der höheren Spannungen auch erhöhte Anforderungen an die Flammwidrigkeit und wegen der oben genannten Gründe auch noch erhöhte Anforderungen an die Farbstabilität, insbesondere an die thermische Farbstabilität hinzu. Die sich daraus ergebende Kombination aus gleichzeitig erhöhter Schlagzähigkeit, erhöhter Flammwidrigkeit und auch erhöhter thermischer Farbstabilität stellt mit den Möglichkeiten des Standes der Technik eine große Herausforderung dar.

JP H11 106644 A bezieht sich auf Polyamid-Zusammensetzungen und daraus herzustellenden Erzeugnissen mit exzellenter hitzeresistenter Farbstabilität. Die Zusammensetzungen enthalten 100 Massenanteile Polyamid, 2 bis 20 Massenanteile Melamincyanurat und 0,005 bis 3 Massenanteile Ammoniumphosphit, wobei konkret in Beispiel 1 auf 100 Massenanteile Polyamid 66, 7 Massenanteile Melamincyanurat und 0,04 Massenanteile Ammoniumhypophosphit eingesetzt werden.

JP 2014 012773 A bezieht sich ebenfalls auf Polyamid-Zusammensetzungen und daraus herzustellenden Erzeugnissen mit exzellenter hitzeresistenter Farbstabilität, wobei auf 100 Massenanteile Polyamid 0,05 Massenanteile Natriumhypophosphit Monohydrat und 0,6 Massenanteile N,N'-Bis-2,2,6,6-tetramethyl-4-piperidinyl-1,3-benzenedicarboxamid eingesetzt werden.

US 6 518 341 B1 offenbart hitze- und farbstabile Polyamid-Zusammensetzungen enthaltend sekundäre aromatische Amine als Stabilisatoren.

Die Lösung des Stands der Technik gemäß Kunststoffhandbuch 3/4, Technische Thermoplaste, Polyamide, Karl Hanser Verlag, München, Wien, 1998, S.16 und S. 148-150 zur Verbesserung der Schlagzähigkeit Polyamid basierter Zusammensetzungen ist der Einsatz von amorphen Kunststoffen wie ABS oder Elastomeren in Polyamid basierten Blends. Solche Polymere, die in anderen Polymeren wie Polyamid zur Erhöhung der Schlagzähigkeit eingesetzt werden, werden in der Fachsprache als Modifikatoren oder Schlagzähmodifikatoren bezeichnet und sind erfindungsgemäß als Schlagzähmodifikatoren zu bezeichnen. Für Polyamid geeignete Schlagzägmofikatoren sind Ethylen-Propylen-Kautschuke (EPM, EPR) oder Ethylen-Propylen-Dien-Kautschuke (EPDM), styrolhaltige Elastomere, z.B. SEBS, SBS, SEPS, oder Acrylatkautschuke. Als Schlagzähmodifikatoren sind aber auch Nitril-Kautschuke (NBR, H-NBR), Siliconkautschuke, EVA und Microgele, wie sie in der WO 2005/033185 A1 beschrieben sind, geeignet.. Untersuchungen im Rahmen der Dissertation von S. Moll zu "Untersuchung der Auswirkungen einer thermisch-oxidativen Beanspruchung auf das Emissionsverhalten von ABS und PP und der Korrelation mit dem Alterungsgrad" aus 2016 zeigten aber, dass sich Poly-(Acrylnitril-Butadien-Styrol) "ABS" unter thermisch-oxidativer Belastung verfärbt. Deshalb erscheinen die typischerweise in Polyamid einzusetzenden Schlagzähmodifikatoren zum Einsatz in Polyamid basierten Erzeugnissen mit den oben beschriebenen Anforderungen an die eindeutige und gleichbleibende farbliche Kennzeichnung nach Einwirkung äußerer Einflüsse ungeeignet. Problematisch ist ferner, dass sich Schlagzähmodifikatoren aufgrund ihres hohen Energieinhaltes häufig negativ auf die Flammwidrigkeit auswirken

Die Schlagzähigkeit wird berechnet als das Verhältnis aus Schlagarbeit und Probenkörperquerschnitt (Maßeinheit: $kJ/m^2$). Durch verschiedene Arten des Schlagbiegeversuchs, sei es nach Charpy gemäß **DIN EN ISO 179,** oder nach Izod gemäß **DIN EN ISO 180,** kann die Schlagzähigkeit bestimmt werden. Gemessen wird die Schlagzähigkeit im Rahmen der vorliegenden Erfindung nach **IS0180-1U** an spritzgegossenen Probekörpern bei 23°C oder -30°C im spritzfrischen Zustand. Der spritzfrische Zustand, auch "dry as moulded", wird in der **DIN EN ISO 1874-2** definiert.

Dem Fachmann ist bekannt, dass der Glasfasergehalt einen Einfluss auf die Schlagzähigkeit einer Polyamidzusammensetzung bzw. auf daraus herzustellende Erzeugnisse hat **(**Glasfaserverstärkte Kunststoffe, P.H. Seiden, Springer-Verlag Berlin, Heidelberg, New York, 1967, Seite 324 bis 325**).** Daher kann die schlagzähverbessernde Wirkung eines Schlagzähmodifikators, bzw. eines die Schlagzähigkeit verbessernden Additivs nur bei gleichem Glasfasergehalt verglichen werden.

Die Aufgabe der vorliegenden Erfindung bestand daher in der Bereitstellung von Komponenten, welche in mit Melamincyanurat flammgeschützten Polyamidzusammensetzungen bzw. daraus herzustellender Erzeugnissen **gleichzeitig** eine verbessert Schlagzähigkeit und ein günstigeres Alterungsverhalten in Form eines verbesserten Farberhalts bzw. einer verbesserten Farbstabilität nach Heißluftalterung aufweisen, **ohne** dabei negative Folgen auf die Flammwidrigkeit zu haben.

Unter einer verbesserten Schlagzähigkeit wird dabei erfindungsgemäß verstanden, dass die nach **ISO180-1U** im Schlagbiegeversuch zu bestimmende Izod-Schlagzähigkeit besser ist, als eine entsprechende Zusammensetzung ohne die erfindungsgemäß einzusetzenden stabilisierenden Komponenten b) sekundäres aromatisches Amin und c) Phosphinsäurederivat.

"Keine negativen Folgen auf die Flammwidrigkeit" wird erfindungsgemäß so verstanden, dass die Brandklassifizierung (V-0, V-1 oder V-2) von Erzeugnissen nach der Methode UL94V bei einer Probenwandstärke von kleiner oder gleich 1,6mm, bevorzugt kleiner oder gleich 0,8mm, **(**Underwriters Laboratories Inc. Standard of Safety, "Test for Flammability of Plastic Materials for Parts in Devices and Appliances", S. 14 bis 18, Northbrook 1998**)** durch Einsatz des erfindungsgemäß einzusetzenden Stabilisatorgemisches der Komponenten b) und c) im Vergleich zu Erzeugnissen ohne die Komponenten b) und c) nicht abnimmt, wobei in Anlehnung an die UL94V-Methode "V-0" als die beste Brandklasse und "V-2" als die schlechteste Brandklassifizierung betrachtet wird.

Unter einer verbesserten thermischen Farbstabilität wird erfindungsgemäß verstanden, dass der $\Delta E$ nach 1000 stündiger Heißluftalterung bei 140°C kleiner als 10 ist. Zur Erläuterung des $\Delta E$ siehe beispielsweise: **https://de.wikipedia.org/wiki/Delta_E.**

Die Lösung der Aufgabe ist der Einsatz von mit Melamincyanurat flammgeschützten Polyamiden, enthaltend als stabilisierende Komponenten eine Mischung aus wenigstens einem sekundären aromatischen Amin sowie wenigstens einem Phosphinsäurederivat.

Gegenstand der vorliegenden Erfindung sind **Zusammensetzungen** sowie darauf basierende **Erzeugnisse** enthaltend

a) wenigstens ein Polyamid, vorzugsweise Polyamid 6 oder Polyamid 66,

b) wenigstens ein sekundäres aromatisches Amin,

c) wenigstens ein Phosphinsäurederivat der allgemeinen Formel (I),

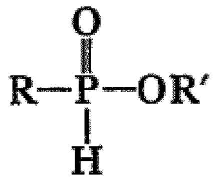

(I)

worin R für ein Wasserstoffatom oder für eine Alkyl-, Cycloalkyl- oder Aryl-Gruppe steht,
und
R' für ein Alkalimetall, ein Erdalkalimetall, ein Metall der 12. oder 13. Gruppe des Periodensystems der Elemente, ein Ammonium-Ion oder für eine $C_1$-$C_{10}$ Alkylgruppe steht,
und

d) Melamincyanurat,
mit der Maßgabe, dass auf 100 Massenanteile der Komponente a)
0,1 bis 3 Massenanteile, bevorzugt 0,3 bis 2 Massenanteile, besonders bevorzugt 0,35 bis 1.5 Massenanteile der Komponente b),
0,01 bis 1 Massenanteile, bevorzugt 0,05 bis 0,5 Massenanteile, besonders bevorzugt 0,07 bis 0,4 Massenanteile der Komponente c) und
2 bis 50 Massenanteile, bevorzugt 4 bis 30 Massenanteile, besonders bevorzugt 5 bis 20 Massenanteile, der Komponente d), eingesetzt werden.

Das Ammonium-Ion $NH_4^+$ für R' ist ein Kation, das mit Anionen ähnlich wie AlkalimetallIonen Salze bildet. Es ist die konjugierte Säure zur Base Ammoniak ($NH_3$).
Überraschenderweise zeigen erfindungsgemäße mit Melamincyanurat flammgeschützte Zusammensetzungen bzw. darauf basierende Erzeugnisse ein günstigeres Alterungsverhalten in Form eines nach Heißluftalterung bestimmten verbesserten Farberhalts bzw. einer verbesserten Farbstabilität, gemäß obiger Definition, als auch eine verbesserte Schlagzähigkeit nach **IS0180-1U** zu Polyamid basierten Zusammensetzungen ohne Verwendung der erfindungsgemäß zu verwendenden Komponenten b) und c).
Die Erfindung betrifft ferner die **Verwendung** von Mischungen enthaltend als Komponente b) wenigstens ein sekundäres aromatisches Amin und als Komponente c) wenigstens ein Phosphinsäurederivat der allgemeinen Formel (I)

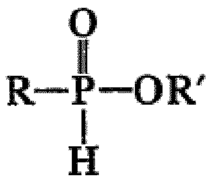

(I)

worin R für ein Wasserstoffatom oder für eine Alkyl-, Cycloalkyl- oder Aryl-Gruppe steht, und R' für ein Alkalimetall, ein Erdalkalimetall, ein Metall der 12. oder 13. Gruppe des Periodensystems der Elemente, ein Ammonium-Ion oder für eine $C_1$-$C_{10}$ Alkylgruppe steht, zur Herstellung von mit Melamincyanurat flammwidrig ausgerüsteter Polyamid basierter Erzeugnisse
mit der Maßgabe, dass auf 100 Massenanteile wenigstens eines als Komponente a) einzusetzenden Polyamids, vorzugsweise Polyamid 6 oder Polyamid 66,
0,1 bis 3 Massenanteile, bevorzugt 0,3 bis 2 Massenanteile, besonders bevorzugt 0,35 bis 1.5 Massenanteile der Komponente b),
0,01 bis 1 Massenanteile, bevorzugt 0,05 bis 0,5 Massenanteile, besonders bevorzugt 0,07 bis 0,4 Massenanteile der Komponente c), und
2 bis 50 Massenanteile, bevorzugt 4 bis 30 Massenanteile, besonders bevorzugt 5 bis 20 Massenanteile, Melamincyanurat als Komponente d) eingesetzt werden,
wobei eine Verbesserung des Alterungsverhalten in Form eines verbesserten Farberhalts bzw. einer verbesserten Farbstabilität im Vergleich zu mit Melamincyanurat flammwidrig ausgerüsteten Polyamid basierten Erzeugnissen ohne die Kombination der Komponenten b) und c) erzielt wird und eine nach **IS0180-1U** (Izod) zu bestimmende Schlagzähigkeit nicht geringer ist, als ein entsprechendes Erzeugnis ohne die Komponente b) und c).
Das Ammonium-Ion $NH_4^+$ für R' ist ein Kation, das mit Anionen ähnlich wie AlkalimetallIonen Salze bildet. Es

ist die konjugierte Säure zur Base Ammoniak ($NH_3$).

Die Erfindung betrifft schließlich ein **Verfahren** zur Verbesserung des Farberhalts bzw. der Farbstabilität im Vergleich zu mit Melamincyanurat flammwidrig ausgerüsteten Polyamid basierten Erzeugnissen ohne die Kombination der Komponenten b) und c) und einer nach **IS0180-1U** (Izod) zu bestimmenden Schlagzähigkeit, die nicht geringer ist, als ein entsprechendes Erzeugnis ohne die Komponente b) und c), indem man Mischungen enthaltend

b) wenigstens ein sekundäres aromatisches Amin und

c) wenigstens ein Phosphinsäurederivat der allgemeinen Formel (I)

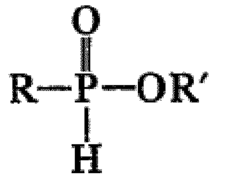

(I)

worin R für ein Wasserstoffatom oder für eine Alkyl-, Cycloalkyl- oder Aryl-Gruppe steht, und R' für ein Alkalimetall, ein Erdalkalimetall, ein Metall der 12. oder 13. Gruppe des Periodensystems der Elemente, ein Ammonium-Ion oder für eine $C_1$-$C_{10}$ Alkylgruppe steht, in mit Melamincyanurat flammwidrig ausgerüsteten Polyamid basierten Erzeugnissen einsetzt mit der Maßgabe,

dass man auf 100 Massenanteile wenigstens eines als der Komponente a) einzusetzenden Polyamids, vorzugsweise Polyamid 6 oder Polyamid 66,

0,1 bis 3 Massenanteile, bevorzugt 0,3 bis 2 Massenanteile, besonders bevorzugt 0,35 bis 1.5 Massenanteile der Komponente b),

0,01 bis 1 Massenanteile, bevorzugt 0,05 bis 0,5 Massenanteile, besonders bevorzugt 0,07 bis 0,4 Massenanteile der Komponente c) und

2 bis 50 Massenanteile, bevorzugt 4 bis 30 Massenanteile, besonders bevorzugt 5 bis 20 Massenanteile, Melamincyanurat als Komponente d) einsetzt.

Das Ammonium-Ion $NH_4^+$ für R' ist ein Kation, das mit Anionen ähnlich wie AlkalimetallIonen Salze bildet. Es ist die konjugierte Säure zur Base Ammoniak ($NH_3$).

Der Lab-Farbraum (auch: CIELAB, CIEL*a*b*, Lab-Farben) beschreibt alle wahrnehmbaren Farben. Er nutzt einen dreidimensionalen Farbenraum, bei dem der Helligkeitswert L* senkrecht auf der Farbebene (a,b) steht. Die L*-Achse beschreibt die Helligkeit (Luminanz) der Farbe mit Werten von 0 bis 100. In der Darstellung steht diese im Nullpunkt senkrecht auf der a*b*-Ebene. Sie kann auch als Neutralgrauachse bezeichnet werden, denn zwischen den Endpunkten Schwarz (L*=0) und Weiß (L*=100) sind alle unbunten Farben (Grautöne) enthalten. In Analogie zur Gegenfarbtheorie von Ewald Hering gibt die a-Koordinate die Farbart und Farbintensität zwischen Grün und Rot an und die b-Koordinate die Farbart und die Farbintensität zwischen Blau und Gelb. Je größer positive a- und b- und je kleiner negative a- und b-Werte, umso intensiver der Farbton. Falls a=0 und b=0, liegt ein unbunter Farbton auf der Helligkeitsachse vor. In den üblichen Softwareumsetzungen kann L* Werte zwischen 0 und 100 annehmen und a und b können zwischen -128 und 127 variiert werden. Die Verfärbung von Polymer basierten Erzeugnisses durch die oxidative Schädigung der Polymermatrix kann durch die Veränderung des ΔE über die Lagerungszeit bei hoher Temperatur bestimmt werden.

Das ΔE ist ein Maß für den empfundenen Farbabstand, das möglichst für alle auftretenden Farben "gleichabständig" ist. In **EN ISO 11664-4** wird der Begriff Farbabstand gegenüber dem Begriff Farbdifferenz bevorzugt. Gegenüber Farbunterschied steht Farbabstand für die quantifizierte Form. Jeder real auftretenden Farbe, auch jeder von einem Gerät abgegebenen oder gemessenen Farbe, lässt sich in einem dreidimensionalen Raum ein Farbort zuordnen. Diese Möglichkeit ist im Graßmannschen Gesetz begründet. Der Wert von ΔE zwischen den Farborten $(L^*,a^*,b^*)_p$ und $(L^*,a^*,b^*)_v$ wird nach **EN ISO 11664-4** als euklidischer Abstand berechnet:

$$\Delta E_{\mathrm{p,v}} = \sqrt{(L_{\mathrm{p}}^* - L_{\mathrm{v}}^*)^2 + (a_{\mathrm{p}}^* - a_{\mathrm{v}}^*)^2 + (b_{\mathrm{p}}^* - b_{\mathrm{v}}^*)^2}$$

Weitere Erläuterungen zu ΔE finden sich in **https://de.wikipedia.org/wiki/Delta_E.**

Zur Klarstellung sei angemerkt, dass vom Rahmen der vorliegenden Erfindung alle aufgeführten allgemeinen oder in Vorzugsbereichen genannten Definitionen und Parameter in beliebigen Kombinationen umfasst sind. Dies betrifft insbesondere auch die einzusetzenden Mengenangaben und Parameter der einzelnen Komponenten in den im Rahmen

der vorliegenden Anmeldung beanspruchten Verfahren und Verwendungen. Die im Rahmen dieser Anmeldung genannten Normen beziehen sich auf die jeweils zum Anmeldetag dieser Erfindung geltende Fassung.

Zur Klarstellung sei deshalb auch angemerkt, dass im Rahmen der vorliegenden Erfindung die Prüfung des Alterungsverhaltens in Form eines verbesserten Farberhalts / einer verbesserten Farbstabilität durch Lagerung von spritzgegossenen Platten von 60mm • 40mm • 4 mm in einem Materialprüfschrank des Modells Binder FP115 bei Umluft bei Temperaturen von 140°C, im folgenden Heißluftalterung genannt, erfolgt(e). Als Maß für die Verfärbung wird bzw. wurde der $\Delta E$ spritzgegossenen Erzeugnissen auf Basis erfindungsgemäßer Polymerzusammensetzungen vor und nach 1000-stündiger Heißluftalterung gemessen.

## Bevorzugte Ausführungsformen

In einer weiteren bevorzugten Ausführungsform betrifft die Erfindung **Zusammensetzungen** sowie **verstärkte Polyamid basierte Erzeugnisse** enthaltend zusätzlich zu den Komponenten a), b), c) und d) noch **wenigstens ein von Komponente d) verschiedenes Flammschutzmittel als Komponente e)** zu 2 bis 70 Massenanteilen, bevorzugt zu 4 bis 50 Massenanteilen, besonders bevorzugt zu 5 bis 40 Massenanteilen, jeweils bezogen auf 100 Massenanteile der Komponente a).

In einer weiteren bevorzugten Ausführungsform betrifft die Erfindung **Zusammensetzungen** sowie **verstärkte Polyamid basierte Erzeugnisse** enthaltend zusätzlich zu den Komponenten a), b), c), d) und e) oder anstelle von e) noch **wenigstens einen Füllstoff oder Verstärkungsstoff als Komponente f)** zu 1 bis 100 Massenanteilen, bevorzugt zu 5 bis 80 Massenanteilen, besonders bevorzugt zu 15 bis 50 Massenanteilen, jeweils bezogen auf 100 Massenanteile der Komponente a).

In einer weiteren Ausführungsform betrifft die Erfindung **Zusammensetzungen** sowie **verstärkte Polyamid basierte Erzeugnisse** enthaltend zusätzlich zu den Komponenten a), b), c), d), e) und f) oder anstelle von e) oder anstelle von f) noch wenigstens ein weiteres, von den Komponenten b), c), d), e) und f) **verschiedenes Additiv als Komponente g)** zu 0,01 bis 50 Massenanteilen, bevorzugt zu 0,1 bis 30 Massenanteilen, besonders bevorzugt zu 0,2 bis 15 Massenanteilen, jeweils bezogen auf 100 Massenanteile der Komponente a).

Zur Klarstellung sei angemerkt, dass die hier zu den Zusammensetzungen genannten bevorzugten Ausführungsformen für die erfindungsgemäße Verwendung und für das erfindungsgemäße Verfahren gleichermaßen gelten. Zur Klarstellung sei angemerkt, dass vom Rahmen dieser Erfindung alle aufgeführten, allgemeinen oder in Vorzugsbereichen genannten Definitionen und Parameter in beliebigen Kombinationen umfasst sind. Sofern nicht anders angegeben, gelten zitierte Normen in der zum Anmeldetag gültigen Fassung. Sofern nicht anders angegeben handelt es sich bei Prozentangaben um Gewichtsprozente.

## Komponente a)

Die erfindungsgemäß als Komponente a) einzusetzenden **Polyamide** können nach verschiedenen Verfahren hergestellt und aus unterschiedlichen Bausteinen synthetisiert werden. Zur Herstellung von Polyamiden sind eine Vielzahl von Verfahrensweisen bekannt geworden, wobei je nach gewünschtem Endprodukt unterschiedliche Monomerbausteine, verschiedene Kettenregler zur Einstellung eines angestrebten Molekulargewichts oder auch Monomere mit reaktiven Gruppen für später beabsichtigte Nachbehandlungen eingesetzt werden können.

Die technisch relevanten Verfahren zur Herstellung von Polyamiden laufen meist über die Polykondensation in der Schmelze. In diesem Rahmen wird auch die hydrolytische Polymerisation von Lactamen als Polykondensation verstanden.

Als Edukte kommen aliphatische und/oder aromatische Dicarbonsäuren wie Adipinsäure, 2,2,4- und 2,4,4-Trimethyladipinsäure, Azelainsäure, Sebazinsäure, Isophthalsäure, Terephthalsäure, aliphatische und/oder aromatische Diamine wie z.B. Tetramethylendiamin, Hexamethylendiamin, 1,9-Nonandiamin, 2,2,4- und 2,4,4-Trimethylhexamethylendiamin, die isomeren Diamino-dicyclohexylmethane, Diaminodicyclohexylpropane, Bisaminomethylcyclohexan, Phenylendiamine, Xylylendiamine, Aminocarbonsäuren wie z.B. Aminocapronsäure, bzw. die entsprechenden Lactame in Betracht. Besonders bevorzugt werden Caprolactame, insbesondere ε-Caprolactam eingesetzt. Copolyamide aus mehreren der genannten Monomeren sind eingeschlossen.

Bevorzugte Polyamide sind teilkristalline Polyamide, die ausgehend von Diaminen und Dicarbonsäuren und/oder Lactamen mit wenigstens 5 Ringgliedern oder entsprechenden Aminosäuren hergestellt werden können.

Als besonders bevorzugte Polyamide werden Polyamid 6, Polyamid 6.6, Polyamid 4.6 und/oder teilaromatischen Copolyamide eingesetzt. Bevorzugte teilaromatische Copolyamide sind PA6T/6, PA6T/66, PA6T/6I oder PA6T/6I/66.

Die im Rahmen der vorliegenden Anmeldung benutzte Kennzeichnung der Polyamide entspricht der internationalen Norm **ISO 1874-1,** wobei die erste(n) Ziffer(n) die C-Atomzahl des Ausgangsdiamins und die letzte(n) Ziffer(n) die C-Atomzahl der Dicarbonsäure angeben. Wird nur eine Zahl angegeben, wie im Falle des PA6, so bedeutet dies,

dass von einer α,ω- Aminocarbonsäure bzw. von dem davon abgeleiteten Lactam, im Falle des PA 6 also dem ε-Caprolactam, ausgegangen worden ist.

Das erfindungsgemäß bevorzugt als Komponente a) einzusetzende PA6 [CAS Nr. 25038-54-4] hat vorzugsweise eine nach **ISO 307** in 0,5 gew.-%iger Lösung in 96 gew.-%iger Schwefelsäure bei 25 °C zu bestimmende Viskositätszahl im Bereich von 80 bis 180 ml/g, besonders bevorzugt im Bereich von 85 bis 170 ml/g und ganz besonders bevorzugt im Bereich von 90 bis 160 ml/g. Erfindungsgemäß bevorzugt als Komponente a) einzusetzendes Polyamid 6 ist beispielswiese als Durethan® B29 bei der Lanxess Deutschland GmbH, Köln erhältlich.

Bevorzugt weist ein als Komponente a) einzusetzendes Polyamid 66 [CAS Nr. 32131-17-2] eine nach **ISO 307** in 0,5 gew.-%iger Lösung in 96 gew.-%iger Schwefelsäure bei 25 °C zu bestimmende Viskositätszahl im Bereich von 80 bis 180 ml/g auf, ganz besonders bevorzugt eine Viskositätszahl im Bereich von 85 bis 170 ml/g, insbesondere bevorzugt im Bereich von 90 bis 160 ml/g. Erfindungsgemäß als Komponente a) einzusetzendes Polyamid 66 ist beispielsweise als Ultramid® A27E01 bei der BASF SE, Ludwigshafen, erhältlich.

Das erfindungsgemäß als Komponente a) einzusetzende Polyamid kann auch im Gemisch mit wenigstens einem anderen Polyamid oder Copolyamids.

Dem als Komponente a) einzusetzenden Polyamid können übliche Additive, vorzugsweise dem Fachmann bekannte Entformungsmittel, Stabilisatoren und/oder Fließhilfsmittel, bereits in der Schmelze zugemischt werden.

**Komponente b)**

Erfindungsgemäß wird als Komponente b) wenigstens ein sekundäres aromatisches Amin eingesetzt. Bevorzugt werden sekundäre aromatische Amine der allgemeinen Formel (II)

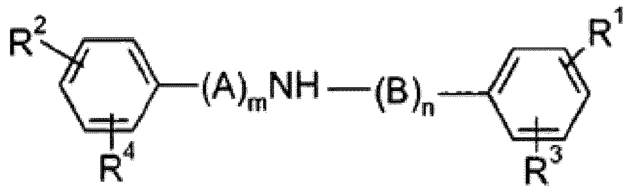

(II)

worin

m und n jeweils unabhängig voneinander für 0 oder 1 stehen,

A und B jeweils unabhängig voneinander für ein mit $C_1$-$C_4$-Alkyl- oder Phenyl-substituiertes tertiäres C-Atom stehen,

$R^1$ und $R^2$ jeweils unabhängig voneinander für Wasserstoff, für eine $C_1$-$C_6$-Alkylgruppe in ortho- und para-Stellung, welche gegebenfalls durch 1 bis 3 Phenylreste substituiert sein kann, oder für Halogen, Carboxyl oder ein Metallsalz dieser Carboxylgruppe stehen,

$R^3$ und $R^4$ jeweils unabhängig voneinander für Wasserstoff oder für einen Methylrest in ortho- und para-Stellung stehen oder für eine tertiäre $C_3$-$C_9$-Alkylgruppe in ortho oder para-Stellung stehen, welche gegebenenfalls durch 1 bis 3 Phenylreste substituiert sein kann.

Bevorzugte Reste A oder B sind in Formel (II) jeweils symmetrisch substituierte tertiäre Kohlenstoffatome, wobei dimethylsubstituierter tertiärer Kohlenstoff besonders bevorzugt ist. Ebenso bevorzugt sind tertiäre Kohlenstoffe, welche 1 bis 2 Phenylgruppen als Substituenten aufweisen.

Bevorzugte Reste $R^1$ und $R^2$ sind in Formel (II) jeweils para t-butyl- oder trimethyl-substituierte quartäre Kohlenstoffatome, bei denen die Methylgruppen vorzugweise durch 1 bis 3 Phenylgruppen ersetzt sind, besonders bevorzugt durch eine Phenylgruppe ersetzt sind, oder jeweils tetramethyl-substituiertes n-Butyl bei dem die Methylgruppen durch Phenylgruppen ersetzt sein können. Bevorzugte Halogene sind Brom und Chlor. Metallsalze sind vorzugsweise solche, worin $R^1$ oder $R^2$ Carboxyl Metallsalze bilden.

Bevorzugt stehen die Reste $R^3$ und $R^4$ in Formel (II) für Wasserstoff, wenn m plus n = 2.

Bevorzugt stehen die Reste $R^3$ und $R^4$ für ein trimethylsubstituiertes quartäres Kohlenstoffatom in ortho- oder para-Position wenn m plus n = 0 oder 1 ist. Vorzugsweise sind in diesem Fall die Methylgruppen durch 1 bis 3 Phenylgruppen ersetzt. Besonders bevorzugt sind in diesem Fall die Methylgruppen durch eine Phenylgruppe ersetzt.

Erfindungsgemäß besonders bevorzugte sekundäre aromatische Amine sind auszuwählen aus der Gruppe
4,4'-Bis(α,α'-tertiäroctyl)diphenylamin,

4,4'Bis(α,α'-dimethylbenzyl)diphenylamin,
4-(1,1,3,3-Tetramethylbutyl)4'triphenylmethyldiphenylamin,
4,4'Bis(α,α'-p-trimethylbenzyl)diphenylamin,
2,4,4'Tris(α,α'-p-trimethylbenzyl)diphenylamin,
2,2'-Dibromo,4,4'-bis(α,α'-dimethylbenzyl) diphenylamin,
4,4'-Bis(α,α-dimethylbenzyl)-2-carboxydiphenylamini-nickel-4,4'-bis(α, α-dimethylbenzyl)-diphenylamin,
2-sec-Butyl-4,4'-bis(α,α-dimethylbenzyl)diphenylamin,
4,4'-Bis(α,α-dimethylbenzyl)-2-(α-methlheptyl)diphenylamin,
2-(α-Methylpentyl)4,4'-ditrityldiphenylamin,
4-α,α-Dimethylbenzyl-4'-isopropoxydiphenylamin,
2-(α-Methylheptyl)-4'-(α,α-dimethylbenzyl)diphenylamin,
2-(α-Methylpentyl)-4'-trityldiphenylamin,
4,4'-Bis(tertiary-butyl)diphenylamin,

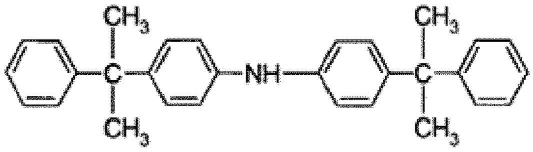

,

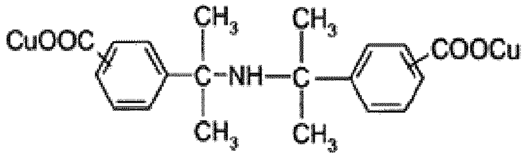

,

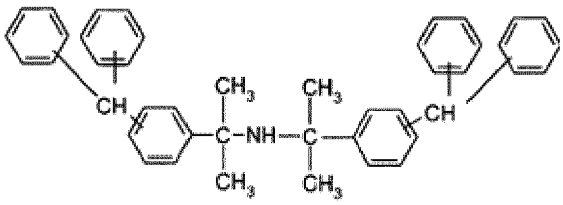

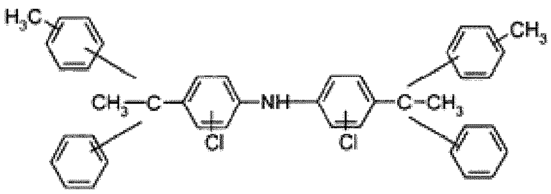

,

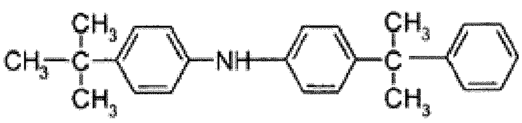

,

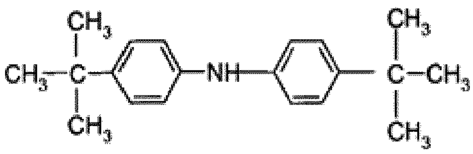

,

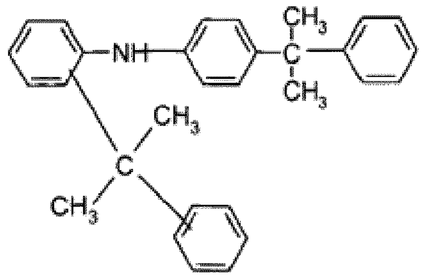

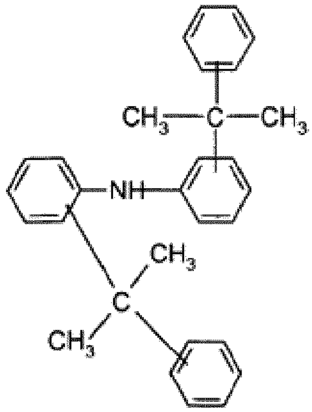

,

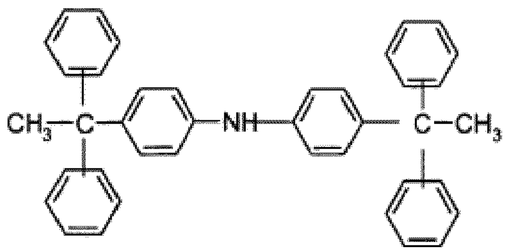

,

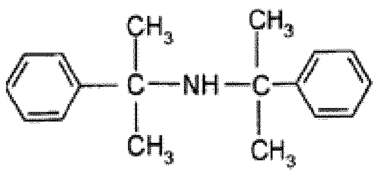

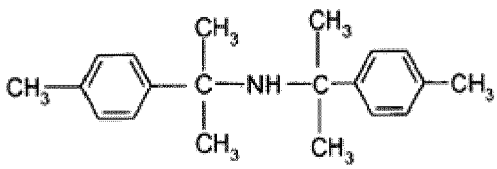

,

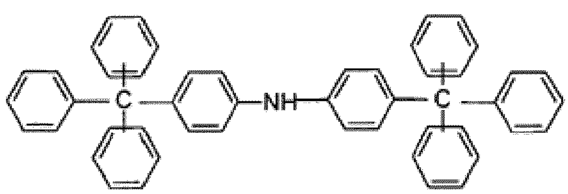

,

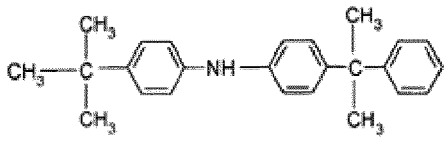

,

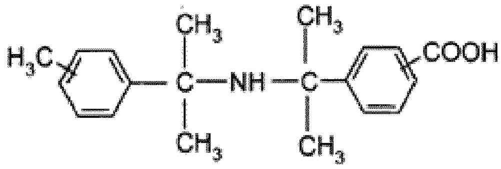

,

und

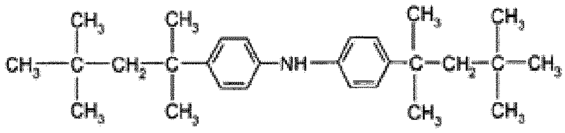

.

Erfindungsgemäß ganz besonders bevorzugt wird 4,4'Bis(α,α'-dimethylbenzyl)diphenylamin [CAS No. 10081-67-1] eingesetzt, das unter anderem bei der Firma Rialon unter dem Namen Rianox® 445 erworben werden kann.

**Komponente c)**

Als Komponente c) wird wenigstens ein Phosphinsäurederivat der allgemeinen Formel (I) eingesetzt

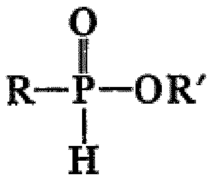

(I)

worin R für ein Wasserstoffatom oder für eine Alkyl-, Cycloalkyl- oder Aryl-Gruppe steht, und R' für ein Alkalimetall, ein Erdalkalimetall, ein Metall der 12. oder 13. Gruppe des Periodensystems der Elemente, ein Ammonium-Ion oder für eine $C_1$-$C_{10}$ Alkylgruppe steht.

Wenn R in Formel (I) ein Wasserstoffatom darstellt, handelt es sich um Hypophosphorsäure. Wenn R in Formel (I) eine Alkyl-, Cycloalkyl- oder Aryl-Gruppe darstellt, handelt es sich um eine Phosphinsäure, wobei die Alkyl-, Cycloalkyl- oder Aryl-Gruppe vorzugsweise bis zu 12 Kohlenstoffatome umfasst.

Wenn R in Formel (I) eine Alkyl-, Cycloalkyl- oder Aryl-Gruppe darstellt, werden bevorzugt Salze und Ester der Phoshinsäure eingesetzt. Erfindungsgemäß bevorzugt werden Salze der Phosphinsäure eingesetzt, wobei es sich auch um Hydrate der Salze handeln kann. Ganz besonders bevorzugt sind Salze der Phosphinsäure auf Basis von Alkalimetallen, Erdalkalimetallen sowie auf Basis von Metallen der 12. oder 13. Gruppe des Periodensystems, wobei es sich auch um Hydrate der Salze handeln kann.

Wenn R in Formel (I) ein Wasserstoffatom ist, handelt es sich um Hypophosphorsäure, wovon bevorzugt deren Salze oder Ester eingesetzt werden. Besonders bevorzugt werden Alkalimetallsalze, Erdalkalimetallsalze, Salze mit Ammonium Ion als Kation, sowie Metallsalze der 12. oder 13. Gruppe des Periodensystems der Hypophosphorsäure eingesetzt. Insbesondere bevorzugt werden Alkalimetallsalze der Hypophosphorsäure eingesetzt, wobei es sich auch um Hydrate der Salze handeln kann.

Ganz besonders bevorzugt wird als Komponente c) Natriumhypophosphit [CAS No. 7681-53-0] oder Natriumhypophosphit Monohydrat [CAS No. 10039-56-2] eingesetzt. Natriumhypophosphit und Natriumhypophosphit Monohydrat sind kommerziell unter anderem bei der Firma Sigma Aldrich zu erwerben.

**Komponente d)**

Als Komponente d) enthalten die erfindungsgemäßen Zusammensetzungen Melamincyanurat [CAS Nr. 37640-57-6]. Unter Melamincyanurat versteht man das Reaktionsprodukt aus vorzugsweise äquimolaren Mengen von Melamin und Cyanursäure bzw. Isocyanursäure. Hierzu zählen u.a. sämtliche handelsüblichen und kommerziell verfügbaren Produktqualitäten. Beispiele hierfür sind u.a. Melapur® MC 25 und Melapur® MC50 (Fa. BASF, Ludwigshafen, Deutschland). Das erfindungsgemäß einzusetzende Melamincyanurat besteht bevorzugt aus Partikeln mit mittleren Teilchendurchmessern von 0,1 μm bis 100 μm, besonders bevorzugt von 0,1 μm bis 30 μm, ganz besonders bevorzugt 0,1 μm bis 7 μm und kann oberflächenbehandelt bzw. mit bekannten Mitteln beschichtet bzw. beschlichtet sein. Hierzu zählen bevorzugt organische Verbindungen, die in monomerer, oligomerer und/oder polymerer Form auf das Melamincyanurat aufgebracht sein können. Insbesondere bevorzugt können Beschichtungssysteme verwendet werden, die auf Silizium-haltigen Verbindungen, insbesondere organofunktionalisierten Silanen oder Organosiloxanen basieren. Beschichtungen mit anorganischen Komponenten sind ebenfalls möglich. Unter Melamincyanurat im Rahmen dieser Anmeldung versteht man u.a. sämtliche handelsüblichen und kommerziell verfügbaren festen, bevorzugt partikelförmigen ,Produktqualitäten. Beispiele hierfür sind u.a. Melapur® MC 25 (DSM) oder Budit® 315 (Chemische Fabrik Budenheim KG).

**Komponente e)**

Als Komponente e) einzusetzendes und von Komponente d) verschiedenes **Flammschutzmittel** werden mineralische Flammschutzmittel, stickstoffhaltige Flammschutzmittel oder phosphorhaltige Flammschutzmittel eingesetzt.

Unter den mineralischen Flammschutzmitteln ist Magnesiumhydroxid besonders bevorzugt. Magnesiumhydroxid [CAS No. 1309-42-8] kann aufgrund seiner Herkunft und Herstellungsweise verunreinigt sein. Typische Verunreinigungen sind z.B. Silicium-, Eisen-, Calcium- und/oder Aluminium-haltige Spezies, die beispielsweise in Form von Oxiden in den Magnesiumhydroxid-Kristallen eingelagert sein können. Das als mineralisches Flammschutzmittel einzusetzende Magnesiumhydroxid kann unbeschlichtet oder aber mit einer Schlichte versehen sein. Eine Schlichte fördert qualitätsbeeinflussend den mechanischen Verbund zwischen Kunststoff(matrix) und der mit Schlichte zu versehenden Komponente. Vorzugsweise wird das als mineralisches Flammschutzmittel vorzugsweise einzusetzende Magnesiumhydroxid mit Schlichten auf Basis von Stearaten oder Aminosiloxanen, besonders bevorzugt mit Aminosiloxanen versehen. Vorzugsweise als mineralisches Flammschutzmittel einzusetzendes Magnesiumhydroxid hat eine mittels Laserdiffraktometrie gemäß **ISO 13320** zu bestimmende mittlere Teilchengröße d50 im Bereich von 0,5 μm bis 6 μm, wobei ein d50 im Bereich von 0,7 μm bis 3,8 μm bevorzugt und ein d50 im Bereich von 1,0 μm bis 2,6 μm besonders bevorzugt ist.

Erfindungsgemäß bevorzugte mineralische Flammschutzmittel sind Magnesiumhydroxidtypen, insbesondere Magnifin® H5IV der Martinswerk GmbH, Bergheim, Deutschland oder Hidromag® Q2015 TC der Firma Penoles, Mexiko-Stadt, Mexico.

Bevorzugte stickstoffhaltige Flammschutzmittel sind die Reaktionsprodukte aus Trichlortriazin, Piperazin und Morpholin gemäß CAS No. 1078142-02-5, insbesondere MCA PPM Triazin HF der Fa. MCA Technologies GmbH, Biel-Benken, Schweiz, ferner Kondensationsprodukte des Melamins, insbesondere Melem, Melam, Melon bzw. höherkondensierte Verbindungen dieses Typs. Bevorzugte anorganische stickstoffhaltige Verbindungen sind Ammoniumsalze.

Ferner können auch Salze aliphatischer und aromatischer Sulfonsäuren und mineralische Flammschutzadditive, insbesondere Aluminiumhydroxid oder Ca-Mg-Carbonat-Hydrate **(**DE-A 4 236 122**)** eingesetzt werden.

In Frage kommen für den Einsatz als Komponente e) ferner Flammschutzmittelsynergisten aus der Gruppe der sauerstoff- stickstoff- oder schwefelhaltigen Metallverbindungen. Bevorzugt sind dabei zinkfreie Verbindungen, insbesondere Molybdänoxid, Magnesiumoxid, Magnesiumcarbonat, Calciumcarbonat, Calciumoxid, Titannitrid, Magnesiumnitrid, Calciumphosphat, Calciumborat, Magnesiumborat oder deren Mischungen.

In einer alternativen Ausführungsform können als Komponente e) aber auch - sofern es der Bedarf erfordert - zinkhaltige Verbindungen eingesetzt werden. Hierzu zählen bevorzugt Zinkoxid, Zinkborat, Zinkstannat, Zinkhydroxystannat, Zinksulfid und Zinknitrid, oder deren Mischungen.

Bevorzugte phosphorhaltige Flammschutzmittel sind organische Metallphosphinate, Aluminiumsalze der Phosphonsäure, roter Phosphor, anorganische Metallhypophosphite, Metallphosphonate, Derivate der 9,10-Dihydro-9-oxa-10-phosphaphenanthren-10-oxide (DOPO-Derivate), Resorcinol-bis-(diphenylphosphat) (RDP) einschließlich Oligomere, Bisphenol-A-bis-diphenylphosphat (BDP) einschließlich Oligomere, Melaminpyrophosphat, Melaminpolyphosphat, Melamin-poly(aluminiumphosphat), Melamin-poly(zinkphosphat) oder Phenoxyphosphazenoligomere und deren Mischungen.

Ein bevorzugtes organisches Metallphosphinat ist Aluminium-tris(diethylphosphinat). Ein bevorzugtes anorganisches Metallhypophosphit ist Aluminiumhypophosphit, wobei Aluminiumhypophosphit besonders bevorzugt ist.

Weitere als Komponente e) einzusetzende Flammschutzmittel sind Kohlebildner, besonders bevorzugt Phenol-Formaldehydharze, Polycarbonate, Polyimide, Polysulfone, Polyethersulfone oder Polyetherketone sowie Antitropfmittel, insbesondere Tetrafluorethylenpolymerisate.

Die als Komponente e) einzusetzenden Flammschutzmittel können in Reinform, sowie über Masterbatche oder Kompaktate der Komponente a) zugesetzt werden.

In einer alternativen Ausführungsform können als Komponente e) aber auch - sofern der Bedarf es erfordert unter Berücksichtigung der Nachteile durch den Verlust der Halogenfreiheit - halogenhaltige Flammschutzmittel eingesetzt werden. Bevorzugte halogenhaltige Flammschutzmittel sind handelsübliche organische Halogenverbindungen, besonders bevorzugt Ethylen-1,2-bistetrabromphthalimid, Decabromdiphenylethan, Tetrabrombisphenol-A-epoxyoligomer, Tetrabrombisphenol-A-oligocarbonat, Tetrachlorbisphenol-A-oligocarbonat, Polypentabrombenzylacrylat, bromiertes Polystyrol oder bromierte Polyphenylenether, die alleine oder in Kombination mit Synergisten eingesetzt werden können, wobei unter den halogenhaltigen Flammschutzmitteln bromiertes Polystyrol besonders bevorzugt ist. Bromiertes Polystyrol wird dabei bevorzugt zu 10 - 30 Gew.-%, besonders bevorzugt zu 15 - 25 Gew.% eingesetzt, jeweils bezogen auf die Gesamtzusammensetzung, wobei wenigstens eine der übrigen Komponenten soweit reduziert wird, dass die Summe aller Gewichtsprozente stets 100 ergibt.

In einer weiteren alternativen Ausführungsform können als Flammschutzmittelsynergisten aber auch Antimontrioxid und Antimonpentoxid eingesetzt werden.

Bromiertes Polystyrol ist in diversen Produktqualitäten kommerziell verfügbar. Beispiele hierfür sind z.B. Firemaster® PBS64 der Fa. Lanxess, Köln, Deutschland sowie Saytex® HP-3010 der Fa. Albemarle, Baton Rouge, USA.

Im Falle der Kombinationen aus Aluminium-tris(diethylphosphinat) und Melaminpolyphosphat bzw. aus Aluminium-tris(diethylphosphinat) und mindestens einem Aluminiumsalz der Phosphonsäure liegt der Anteil an Aluminium-tris(diethylphosphinat) bevorzugt im Bereich von 40 bis 90 Gewichtsteilen, besonders bevorzugt im Bereich von 50 bis 80 Gewichtsteilen, ganz besonders bevorzugt im Bereich von 60 bis 70 Gewichtsteilen, jeweils bezogen auf 100 Gewichtsteile der Kombination aus Aluminiumtris(diethylphosphinat) und Melaminpolyphosphat bzw. der Kombination aus Aluminiumtris(diethylphosphinat) und mindestens einem Aluminiumsalz der Phosphonsäure.

Das als Komponente e) bevorzugt einzusetzende Aluminium-tris(diethylphosphinat) ist dem Fachmann als Exolit® OP1230 oder Exolit® OP1240 der Fa. Clariant International Ltd. Muttenz, Schweiz, bekannt. Melaminpolyphosphat ist in diversen Produktqualitäten kommerziell verfügbar. Beispiele hierfür sind z.B. Melapur® 200/70 der Fa. BASF, Ludwigshafen, Deutschland sowie Budit® 3141 der Chemische Fabrik Budenheim KG, Budenheim, Deutschland.

Bevorzugte Aluminiumsalze der Phosphonsäure sind ausgewählt aus der Gruppe primäres Aluminiumphosphonat $[Al(H_2PO_3)_3]$,

basisches Aluminiumphosphonat $[Al(OH)H_2PO_3)_2{\cdot}H_2O]$,

$Al_2(HPO_3)_3{\cdot}x\ Al_2O_3{\cdot}nH_2O$ mit x im Bereich von 2,27 bis 1 und n im Bereich von 0 bis 4,

$Al_2(HPO_3)_3 \cdot (H_2O)_q$ der allgemeinen Formel (III) mit q im Bereich von 0 bis 4, insbesondere Aluminiumphosphonattetrahydrat $[Al_2(HPO_3)_3{\cdot}4H_2O]$ oder sekundäres Aluminiumphosphonat $[Al_2(HPO_3)_3]$,

$Al_2M_z(HPO_3)_y(OH)_v \cdot (H_2O)_w$ der allgemeinen Formel (IV) worin M Alkalimetallion(en) bedeutet und z im Bereich von 0,01 bis 1,5, y im Bereich von 2,63 - 3,5, v im Bereich von 0 bis 2 und w im Bereich von 0 bis 4 liegt, und

$Al_2(HPO_3)_u(H_2PO_3)_t \cdot (H_2O)_s$ der allgemeinen Formel (V), worin u im Bereich von 2 bis 2,99, t im Bereich von 2 bis 0,01 und s im Bereich von 0 bis 4 liegt,

wobei in Formel (IV) z, y und v sowie in Formel (V) u und t nur solche Zahlen annehmen können, dass das entsprechende Aluminiumsalz der Phosphonsäure als Ganzes ungeladen ist.

Bevorzugte Alkalimetalle M in Formel (IV) sind Natrium und Kalium.

Die beschriebenen Aluminiumsalze der Phosphonsäure können dabei einzeln oder im Gemisch eingesetzt werden.

Besonders bevorzugte Aluminiumsalze der Phosphonsäure werden ausgewählt aus der Gruppe

primäres Aluminiumphosphonat $[Al(H_2PO_3)_3]$,

sekundäres Aluminiumphosphonat $[Al_2(HPO_3)_3]$,

basisches Aluminiumphosphonat $[Al(OH)H_2PO_3)_2{\cdot}2H_2O]$,

Aluminiumphosphonattetrahydrat $[Al_2(HPO_3)_3{\cdot}4H_2O]$ und

$Al_2(HPO_3)_3{\cdot}x\ Al_2O_3{\cdot}n\ H_2O$ mit x im Bereich von 2,27 bis 1 und n im Bereich von 0 bis 4.

Ganz besonders bevorzugt sind sekundäres Aluminiumphosphonat $Al_2(HPO_3)_3$ [CAS No. 71449-76-8] und sekundäres Aluminiumphosphonattetrahydrat $Al_2(HPO_3)_3{\cdot}4H_2O$ [CAS No. 156024-71-4], insbesondere bevorzugt ist sekundäres Aluminiumphosphonat $Al_2(HPO_3)_3$.

Die Herstellung erfindungsgemäß als Komponente e) einzusetzender Aluminiumsalze der Phosphonsäure ist zum Beispiel in WO 2013/083247 A1 beschrieben. Sie erfolgt üblicherweise durch Umsetzung einer Aluminiumquelle, bevorzugt Aluminiumisopropoxid, Aluminiumnitrat, Aluminiumchorid oder Aluminiumhydroxid, mit einer Phosphorquelle, bevorzugt Phosphonsäure, Ammoniumphosphonat, Alkaliphosphonat, und wahlweise mit einem Templat in einem Lösungsmittel bei 20 bis 200°C während einer Zeitspanne von bis zu 4 Tagen. Aluminiumquelle und Phosphorquelle werden dazu vermischt, unter hydrothermalen Bedingungen oder unter Rückfluss erhitzt, abfiltriert gewaschen und getrocknet. Bevorzugte Template dabei sind 1,6 Hexandiamin, Guanidincarbonat oder Ammoniak. Bevorzugtes Lösungsmittel ist Wasser.

**Komponente f)**

In bevorzugter Ausführungsform wird als Komponente f) wenigstens ein **Füllstoff oder Verstärkungsstoff** eingesetzt. Dabei können auch Mischungen aus zwei oder mehreren unterschiedlichen Füllstoffen oder Verstärkungsstoffen eingesetzt werden.

Vorzugsweise wird als Komponente f) wenigstens ein Füll- oder Verstärkungsstoff aus der Gruppe Kohlenstofffasern [CAS Nr. 7440-44-0], Glaskugeln oder Voll- oder Hohlglaskugeln, Glasfasern, gemahlenes Glas, amorphes Quarzglas, Aluminium-Borsilikatglas mit einem Alkaligehalt 1% (E-Glas) [CAS Nr. 65997-17-3], amorphe Kieselsäure [CAS Nr. 7631-86-9], Quarzmehl [CAS Nr. 14808-60-7], Calciumsilicat [CAS Nr. 1344-95-2], Calciummetasilicat [CAS Nr. 10101-39-0], Magnesiumcarbonat [CAS Nr. 546-93-0], Kaolin [CAS Nr. 1332-58-7], calciniertes Kaolin [CAS Nr. 92704-41-1], Kreide [CAS Nr.1317-65-3], Kyanit [CAS Nr. 1302-76-7], gepulverter oder gemahlener Quarz [CAS Nr. 14808-60-7], Glimmer [CAS Nr. 1318-94-1], Phlogopit [CAS Nr. 12251-00-2], Bariumsulfat [CAS Nr. 7727-43-7], Feldspat [CAS Nr. 68476-25-5], Wollastonit [CAS Nr. 13983-17-0], Montmorillonit [CAS Nr. 67479-91-8], Pseudoböhmit der Formel AlO(OH), Magnesiumcarbonat [CAS Nr. 12125-28-9], Nephelinsyenit [CAS Nr. 37244-96-5] und Talkum [CAS Nr. 14807-96-6] eingesetzt.

Unter den faserförmigen Füllstoffen oder Verstärkungsstoffen sind Glasfasern und Wollastonit besonders bevorzugt, wobei Glasfasern ganz besonders bevorzugt sind. Es können auch Kohlenstofffasern als Füllstoff oder Verstärkungsstoff eingesetzt werden.

Bezüglich der als Komponente f) einzusetzenden Glasfasern unterscheidet der Fachmann gemäß **"http://de.wikipedia.org/wiki/Faser-Kunststoff-Verbund"** geschnittene Fasern, auch als Kurzfasern bezeichnet, mit einer Länge im Bereich von 0,1 bis 1 mm, Langfasern mit einer Länge im Bereich von 1 bis 50 mm und Endlosfasern mit einer Länge L > 50 mm. Kurzfasern werden vorzugsweise in der Spritzgusstechnik eingesetzt und können direkt mit einem Extruder verarbeitet werden. Langfasern können ebenfalls noch in Extrudern verarbeitet werden. Sie finden im großen Umfang Einsatz beim Faserspritzen. Langfasern werden häufig Duroplasten als Füllstoff zugemischt. Endlosfasern werden als Rovings oder Gewebe in faserverstärkten Kunststoffen eingesetzt. Erzeugnisse mit Endlosfasern erzielen die höchsten Steifigkeits- und Festigkeitswerte. Des Weiteren werden gemahlene Glasfasern angeboten, deren Länge nach der Vermahlung typischerweise im Bereich von 70 bis 200 $\mu$m liegt.

Erfindungsgemäß bevorzugt als Komponente f) einzusetzende Glasfasern sind geschnittene Langglasfasern mit einer mittels Laserdiffraktometrie gemäß **ISO 13320** zu bestimmenden mittleren Ausgangslänge im Bereich von 1 bis 50 mm, besonders bevorzugt im Bereich von 1 bis 10 mm, ganz besonders bevorzugt im Bereich von 2 bis 7 mm. Zu Laserbeugungs-Partikelgrößenbestimmung/Laserdiffraktometrie gemäß der Norm **ISO 13320** siehe:
**https://de.wikipedia.org/wiki/Laserbeugungs-Partikelgr%C3%B6%C3%9Fenanalyse**

Bevorzugte, als Komponente f) einzusetzende Glasfasern haben einen mittels Laserdiffraktometrie gemäß **ISO 13320** zu bestimmenden mittleren Faserdurchmesser im Bereich von 7 bis 18 $\mu$m, besonders bevorzugt im Bereich von 9 bis 15 $\mu$m.

Die als Komponente f) einzusetzenden Füllstoffe, vorzugsweise Glasfasern, werden in einer bevorzugten Ausführungsform mit einem geeigneten Schlichtesystem oder einem Haftvermittler bzw. Haftvermittlersystem ausgerüstet. Bevorzugt wird ein Schlichtesystem bzw. ein Haftvermittler auf Silanbasis eingesetzt. Besonders bevorzugte Haftvermittler auf Silanbasis für die Behandlung der Komponente e), insbesondere für die Behandlung von Glasfasern, sind Silanverbindungen der allgemeine Formel (VII)

$$(X\text{-}(CH_2)_q)_k\text{-}Si\text{-}(O\text{-}CrH_{2r+1})_{4-k} \qquad \text{(VII)}$$

worin

X für $NH_2$-, Carboxyl-, HO- oder

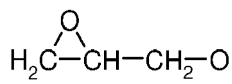

steht,

q in Formel (VII) für eine ganze Zahl von 2 bis 10, bevorzugt 3 bis 4 steht,

r in Formel (VII) für eine ganze Zahl von 1 bis 5, bevorzugt 1 bis 2 steht und

k in Formel (VII) für eine ganze Zahl von 1 bis 3, bevorzugt 1 steht.

Insbesondere bevorzugte Haftvermittler sind Silanverbindungen aus der Gruppe Aminopropyltrimethoxysilan, Aminobutyltrimethoxysilan, Aminopropyltriethoxysilan, Aminobutyltriethoxysilan sowie die entsprechenden Silane, welche als Substituent X eine Glycidyl- oder eine Carboxylgruppe enthalten, wobei Carboxylgruppen insbesondere ganz besonders bevorzugt sind.

Für die Ausrüstung der als Komponente f) einzusetzenden Füllstoffe, vorzugsweise Glasfasern, wird der Haftvermittler, bevorzugt die Silanverbindungen gemäß Formel (VII), bevorzugt in Mengen im Bereich von 0,05 bis 2 Gew.-%, besonders bevorzugt in Mengen im Bereich von 0,25 bis 1,5 Gew.-% und ganz besonders bevorzugt in Mengen im Bereich von 0,5 bis 1 Gew.-%, jeweils bezogen auf 100 Gew.-% Komponente e), eingesetzt.

Die als Komponente f) vorzugsweise einzusetzenden Glasfasern können bedingt durch die Verarbeitung zur Zusammensetzung bzw. zum Erzeugnis in der Zusammensetzung bzw. im Erzeugnis kürzer sein, als die ursprünglich eingesetzten Glasfasern. So liegt der mittels hochauflösender Röntgencomputertomographie zu bestimmende arithmetische Mittelwert der Glasfaserlänge nach der Verarbeitung häufig nur noch im Bereich von 150 μm bis 300 μm.

Gemäß **"http://www.r-g.de/wiki/Glasfasern"** werden Glasfasern im Schmelzspinnverfahren (Düsenzieh-, Stabzieh- und Düsenblasverfahren) hergestellt. Beim Düsenziehverfahren fließt unter Ausnutzung der Schwerkraft die heiße Glasmasse durch hunderte Düsenbohrungen einer Platinspinnplatte. Die Elementarfäden können in unbegrenzter Länge mit einer Geschwindigkeit von 3 - 4 km/Minute gezogen werden.

Der Fachmann unterscheidet verschiedene Glasfasersorten, wovon hier beispielsweise einige gelistet sind:

- E-Glas, das meistverwendete Material mit optimalem Preis-Leistungsverhältnis (E-Glas von R&G)
- H-Glas, Hohlglasfasern für reduziertes Gewicht (R&G Glashohlfasergewebe 160 $g/m^2$ und 216 $g/m^2$)
- R, S-Glas, für erhöhte mechanische Anforderungen (S2-Glas von R&G)
- D-Glas, Borsilicatglas für erhöhte elektrische Anforderungen
- C-Glas, mit erhöhter chemischer Widerstandsfähigkeit
- Quarzglas, mit hoher Temperaturbeständigkeit

Weitere Beispiele finden sich unter **"http://de.wikipedia.org/wiki/Glasfaser".** Für die Kunststoffverstärkung haben E-Glasfasern die größte Bedeutung erlangt. E steht für Elektro-Glas, da es ursprünglich vor allem in der Elektroindustrie eingesetzt wurde. Für die Produktion von E-Glas werden Glasschmelzen aus reinem Quarz mit Zusätzen aus Kalkstein, Kaolin und Borsäure hergestellt. Sie enthalten neben Siliziumdioxid unterschiedliche Mengen verschiedener Metalloxide. Die Zusammensetzung bestimmt die Eigenschaften der Produkte. Erfindungsgemäß bevorzugt wird wenigstens eine Sorte Glasfasern aus der Gruppe E-Glas, H-Glas, R,S-Glas, D-Glas, C-Glas und Quarzglas eingesetzt, besonders bevorzugt Glasfasern aus E-Glas.

Glasfasern aus E-Glas sind der am weitesten verbreitete Verstärkungswerkstoff. Die Festigkeitseigenschaften entsprechen denen von Metallen (z.B. Alu-Legierungen), wobei das spezifische Gewicht von E-Glasfasern enthaltenden Laminaten niedriger ist, als das der Metalle. E-Glasfasern sind unbrennbar, hitzefest bis ca. 400 °C und beständig gegen die meisten Chemikalien und Witterungseinflüsse.

Bevorzugt werden als Komponente f) ferner auch nadelförmige mineralische Füllstoffe eingesetzt. Unter nadelförmigen, mineralischen Füllstoffen wird erfindungsgemäß ein mineralischer Füllstoff mit stark ausgeprägtem nadelförmigen Charakter verstanden. Bevorzugt als Komponente e) einzusetzender nadelförmiger mineralischer Füllstoff ist Wollastonit. Bevorzugt weist der nadelförmige, mineralische Füllstoff ein mittels hochauflösender Röntgencomputertomographie zu bestimmendes Länge : Durchmesser - Verhältnis im Bereich von 2:1 bis 35:1, besonders bevorzugt im Bereich von 3:1 bis 19:1, insbesondere bevorzugt im Bereich von 4:1 bis 12:1 auf. Die mittels hochauflösender Röntgencomputertomographie zu bestimmende mittlere Teilchengröße der nadelförmigen, mineralischen Füllstoffe liegt bevorzugt bei kleiner 20 μm, besonders bevorzugt bei kleiner 15 μm, insbesondere bevorzugt bei kleiner 10 μm.

Besonders bevorzugt wird als Komponente f) aber auch nicht-faserförmiges und nicht-geschäumtes gemahlenes Glas mit einer mittels Laserdiffraktometrie gemäß **ISO 13320** zu bestimmenden Teilchengrößenverteilung mit einem d90 im Bereich von 5 bis 250 μm eingesetzt, bevorzugt mit einem d90 im Bereich von 10 bis 150 μm, besonders bevorzugt mit einem d90 im Bereich von 15 bis 80 μm, ganz besonders bevorzugt mit einem d90 im Bereich von 16 bis 25 μm. Bezüglich der d90-Werte, ihrer Bestimmung und ihrer Bedeutung sei auf Chemie Ingenieur Technik (72) S. 273-276, 3/2000, Wiley-VCH Verlags GmbH, Weinheim, 2000 verwiesen, wonach der d90-Wert diejenige Partikelgröße ist, unterhalb derer 90 % der Partikelmenge liegen.

Erfindungsgemäß bevorzugt ist ein nicht-faserförmiges und nicht-geschäumtes gemahlenes Glas von partikelförmiger, nicht zylindrischer Gestalt mit einem mittels Laserdiffraktometrie gemäß **ISO 13320** zu bestimmenden Längen- zu Dickenverhältnis kleiner 5, bevorzugt kleiner als 3, besonders bevorzugt kleiner 2. Der Wert Null ist selbstverständlich ausgeschlossen.

Das in einer Ausführungsform als Komponente f) besonders bevorzugt einzusetzende nicht-geschäumte und nicht faserförmige gemahlene Glas ist zudem dadurch gekennzeichnet, dass es nicht die für faserförmiges Glas typische Glasgeometrie mit zylindrischem oder ovalen Querschnitt mit einem mittels Laserdiffraktometrie gemäß **ISO 13320** zu bestimmenden Längen- zu Durchmesserverhältnis (L/D-Verhältnis) größer 5 aufweist.

Das in einer Ausführungsform erfindungsgemäß als Komponente f) besonders bevorzugt einzusetzende nicht-geschäumte und nicht-faserförmige gemahlene Glas wird bevorzugt durch Mahlung von Glas mit einer Mühle, bevorzugt einer Kugelmühle und besonders bevorzugt mit anschließender Sichtung bzw. Siebung erhalten. Bevorzugte Edukte für die Vermahlung des in einer Ausführungsform als Komponente f) einzusetzenden nichtfaserförmigem und nicht-geschäumten, gemahlenen Glas sind auch Glasabfälle, wie sie insbesondere bei der Herstellung von Glaserzeugnissen als unerwünschtes Nebenprodukt und / oder als nicht spezifikationsgerechtes Hauptprodukt (sogenannte Offspec-Ware) anfallen. Hierzu gehört insbesondere Abfall-, Recycling- und Bruchglas wie es insbesondere bei der Herstellung von Fenster- oder Flaschenglas, sowie bei der Herstellung von glashaltigen Füll- und Verstärkungsstoffen, insbesondere in Form von sogenannten Schmelzekuchen, anfallen kann. Das Glas kann gefärbt sein, wobei nichtgefärbtes Glas als Ausgangsmaterial zum Einsatz als Komponente e) bevorzugt ist.

## Komponente g)

Als Komponente g) wird wenigstens ein weiteres, von den Komponenten b) c), d) und e) verschiedenes **Additiv** eingesetzt. Bevorzugte als Komponente g) einzusetzende Additive sind Antioxidantien, Thermostabilisatoren, UV-Stabilisatoren, Gammastrahlenstabilisatoren, Komponenten zur Verringerung der Wasseraufnahme bzw. Hydrolysestabilisatoren, Antistatika, Emulgatoren, Nukleierungsmittel, Weichmacher, Verarbeitungshilfsmittel, Gleit- und/oder Entformungsmittel, Komponenten zur Verringerung der Wasseraufnahme, Fließhilfsmittel, Elastomermodifikatoren, kettenverlängernd wirkende Additive, Farbmittel, Farbstoffe, Pigmente oder Laserabsorber.

In einer alternativen Ausführungsform können als Komponente g) auch Schlagzähmodifikatoren eingesetzt werden.

Die als Komponente g) einzusetzenden Additive können alleine oder in Mischung bzw. in Form von Masterbatchen eingesetzt werden.

Bevorzugte **Thermostabilisatoren** der Komponente g) sind sterisch gehinderte Phenole, insbesondere solche enthaltend mindestens eine 2,6-Di-tert.-butylphenyl-Gruppe und/oder 2-tert.-Butyl-6-methylphenyl-Gruppe, Phosphite, Hydrochinone, substituierte Resorcine, Salicylate, Benzotriazole und Benzophenone, sowie verschieden substituierte Vertreter dieser Gruppen oder deren Mischungen. Dabei sind solche, enthaltend mindestens eine 2,6-Di-tert.-butylphenyl-Gruppe besonders bevorzugt und 3,3'-Bis(3,5-di-tert-butyl-4-hydroxyphenyl)-N,N'-hexamethylendipropionamid [CAS Nr. 23128-74-7], beispielsweise erhältlich als Lowinox® HD 98 (Fa. Addivant, Danbury, CT, USA) ganz besonders bevorzugt.

In einer alternativen Ausführungsform können als Thermostabilisatoren - soweit es der Bedarf erfordert und unter Berücksichtigung von Nachteilen auf die thermische Farbstabilität - aber auch Kupfersalze eingesetzt werden. Bevorzugt wird als Kupfersalz Kupfer(I)iodid [CAS Nr. 7681-65-4] und/oder Kupfer(triphenylphosphino)iodid [CAS No. 47107-74-4] eingesetzt.

Als Komponente g) einzusetzende **UV-Stabilisatoren** werden vorzugsweise substituierte Resorcine, Salicylate, Benzotriazole und Benzophenone, HALS-Derivate ("Hindered Amine Light Stabilizers") enthaltend mindestens eine 2,2,6,6-Tetramethyl-4-piperidyl-Einheit oder Benzophenone eingesetzt. Als Komponente f) einzusetzende UV-Stabilisatoren werden vorzugsweise zu 0,01 bis 2 Massenanteilen, besonders bevorzugt zu 0,1 bis 1 Massenanteilen, jeweils bezogen auf 100 Massenanteile der Komponente A) eingesetzt.

Als Komponente g) einzusetzende **Farbmittel** werden in einer Ausführungsform bevorzugt anorganische Pigmente eingesetzt, besonders bevorzugt Ultramarinblau, Bismutvanadat [CAS No. 14059-33-7], Eisenoxid [CAS No. 1309-37-1], Titandioxid [CAS No. 13463-67-7 (Rutil) oder CAS No. 1317-70-0 (Anatas)], Bariumsulfat [CAS No. 7727-43-7], Zinksulfid [CAS No. 1314-98-3] oder Sulfide enthaltend Cer. Bevorzugte Sulfide enthaltend Cer sind Cer(III)sulfid ($Ce_2S_3$) [CAS-No. 12014-93-6], auch bekannt als C.I.Pigment Orange 75, oder Cer(III)sulfid/Lanthan(III)sulfid ($Ce_2S_3$ / $La_2S_3$) [CAS-No. 12014-93-6 ; CAS-No. 12031-49-1] auch bekannt als C.I. Pigment Orange 78. Insbesondere bevorzugt ist Bariumsulfat. Insbesondere bevorzugt ist auch Titandioxid, auch als Pigment White 6 oder CI 77891 bezeichnet.

Erfindungsgemäß ebenfalls als Komponente g) einzusetzende **Farbmittel** sind vorzugsweise auch Pigmentsysteme auf Basis anorganischer Mischoxide enthaltend Titandioxid, Zinnoxid und Zinkoxid. Ein als Komponente g) erfindungsgemäß bevorzugt einzusetzendes Pigmentsystem auf Basis anorganischer Mischoxide enthaltend Titandioxid, Zinnoxid und Zinkoxid ist aus EP 0 113 229 B1 bekannt, ebenso dessen Herstellung. Der Inhalt der EP 0 113 229 B1 wird von der vorliegenden Beschreibung vollumfänglich umfasst. Gemäß EP 0 113 229 B1 werden die Mengenverhältnisse der Zinn-, Titan-, Zink- und Sauerstoffanteile in einem erfindungsgemäß als Komponente f) einzusetzenden Pigmentsystem vorzugsweise durch die allgemeine Formel (VIII) wiedergegeben

$$(TiO_2)_cSnO(ZnO)_d(SnO)_e, \qquad (VIII)$$

worin c im Bereich von 0,3 bis 6,2 liegt, d im Bereich von 0,04 bis 6,2 liegt und e im Bereich von 0 bis 7 liegt.

Vorzugsweise enthält ein als Komponente g) einzusetzendes Pigmentsystem der allgemeinen Formel (VII) 300 bis 6000 Atomteile Alkalimetallreste pro Million Atomteile des gesamten Komplexes bzw. Pigmentsystems. Ein als Komponente g) einzusetzendes Pigmentsystem auf Basis anorganischer Mischoxide aus Titandioxid, Zinnoxid und Zinkoxid kann erfindungsgemäß einzeln oder im Gemisch mit wenigstens einem weiteren anorganischen Mischoxid aus Titandioxid, Zinnoxid und Zinkoxideingesetzt werden.

Insbesondere bevorzugt ist ein Pigmentsystem der allgemeinen Formel (VIII) der CAS-Nr. 923954-49-8, oder C.I. Pigment Orange 82 [CAS-Nr. 2170864-77-2] oder C.I.Pigment Yellow 216 [CAS-Nr. 817181-98-9] einzusetzen. Bezüglich der C.I. Klassifizierung siehe: **https://de.wikipedia.org/wiki/Colour_Index.** Pigment Orange 82 kann beispielsweise unter dem Namen Sicopal® Orange K2430 bei der Firma BASF SE, Ludwigshafen, Deutschland bezogen werden. Pigment Yellow 216 kann beispielsweise unter dem Namen Orange 10P340 bei der Firma Shepherd, Gent, Belgien bezogen werden.

Als Komponente g) einzusetzende weitere **Farbmittel** werden in einer Ausführungsform bevorzugt organische Farbmittel eingesetzt, besonders bevorzugt Phthalocyanine, Chinacridone, Benzimidazole, insbesondere Ni-2-hydroxy-napthyl-benzimidazol [CAS Nr. 42844-93-9] und/oder Pyrimidin-azo-benzimidazol [CAS-Nr. 72102-84-2] und/oder Pigment Yellow 192 [CAS Nr. 56279-27-7], außerdem Perylene, Anthrachinone, insbesondere C.I. Solvent Yellow 163 [CAS Nr. 13676-91-0] und Phthaloperinone, insbesondere 10,10'-Oxy-bis-12H-phthaloperin-12-on [CAS Nr. 203576-97-0] und 12H-Phthaloperin-12-on [CAS Nr. 6925-69-5], wobei 10,10'-Oxy-bis-12H-phthaloperin-12-on insbesondere bevorzugt ist.

In einer alternativen Ausführungsform können - sofern es der Bedarf erfordert - auch Ruß oder Nigrosin als Farbmittel der Komponente g) eingesetzt werden.

In einer besonders bevorzugten Ausführungsform werden die Farbmittel erfindungsgemäß zur Markierung von Hochvoltkomponenten so eingesetzt, dass die farbstabilen, schlagzähen Polyamid basierten Erzeugnisse "orange" eingefärbt sind, wobei Farbtöne, die im RAL-Farbsystem "ähnlich" zu denen der Farbnummern RAL2001, RAL2003, RAL2004, RAL2007, RAL2008, RAL2009, RAL2010 und RAL2011 sind, bevorzugt sind und solche Farbtöne die "ähnlich" zu den Farbnummern RAL2003, RAL2008 und RAL2011 sind, ganz besonders bevorzugt sind.

Unter "orange" wird erfindungsgemäß ein Farbton verstanden, der "ähnlich" zu einem Farbton einer mit "2" beginnenden Farbnummer der RAL-Farbtabelle ist. "Ähnliche" Farbtöne sind dabei erfindungsgemäß solche, deren Farbabstand im L*a*b*-System einen $\Delta$ E von <20, bevorzugt ein $\Delta$E <10, besonders bevorzugt $\Delta$E <5 zu der Farbe der RAL-Farbtabelle aufweisen. Zur Erläuterung des in **EN ISO 11664-4** definierten $\Delta$E siehe beispielsweise: **https://de.wikipedia.org/wiki/Delta_E.**

Als Komponente g) einzusetzende **Nukleierungsmittel** sind vorzugsweise Natrium- oder Calciumphenylphosphinat, Aluminiumoxid, Siliziumdioxid oder Talkum. Besonders bevorzugt wird als Nukleierungsmittel Talkum [CAS-Nr.14807-96-6] eingesetzt, insbesondere mikrokristallines Talkum. Talkum, auch als Talk bezeichnet, ist ein Schichtsilikat mit der chemischen Zusammensetzung $Mg_3[Si_4O_{10}(OH)_2]$, das je nach Modifikation als Talk-1A im triklinen oder als Talk-2M im monoklinen Kristallsystem kristallisiert **(http://de.wikipedia.org/wiki/Talkum).** Erfindungsgemäß einzusetzendes Talkum kann beispielsweise als Mistron® R10 von Imerys Talc Group, Toulouse, Frankreich (Rio Tinto Group) bezogen werden.

Als Komponente g) einzusetzende **Fließhilfsmittel** werden bevorzugt Copolymerisate aus mindestens einem $\alpha$-Olefin mit mindestens einem Methacrylsäurester oder Acrylsäureester eines aliphatischen Alkohols eingesetzt. Besonders bevorzugt sind dabei Copolymerisate, bei denen das $\alpha$-Olefin aus Ethen und/oder Propen aufgebaut ist und der Methacrylsäurester oder Acrylsäureester als Alkoholkomponente lineare oder verzweigte Alkylgruppen mit 6 bis 20C-Atomen enthält. Ganz besonders bevorzugt ist Acrylsäure-(2-ethyl)-hexylester. Als Fließhilfsmittel geeignete Copolymerisate zeichnen sich neben der Zusammensetzung auch durch das niedrige Molekulargewicht aus. Dementsprechend sind für die erfindungsgemäßen Polymerzusammensetzungen vor allem Copolymerisate geeignet, die einen MFI-Wert gemessen bei 190°C und einer Belastung von 2,16 kg von mindestens 100g/10min, bevorzugt von mindestens 150g/10min, besonders bevorzugt von mindestens 300 g / 10 min aufweisen. Der MFI, Melt-Flow-Index, dient zur Charakterisierung des Flusses einer Schmelze eines Thermoplasten und unterliegt den Normen **ISO 1133** oder **ASTM D 1238.** Insbesondere bevorzugt wird als Fließhilfsmittel ein Copolymerisat aus Ethen und Acrylsäure-(2-ethyl)-hexylester mit MFI 550 eingesetzt, bekannt als Lotryl® 37EH550.

Als Komponente g) einzusetzende **kettenverlängernde Additive** werden bevorzugt di- oder mehrfunktionelle

verzweigend oder kettenverlängernd wirkende Additive, enthaltend mindestens zwei verzweigend oder kettenverlängernd wirkende funktionelle Gruppen pro Molekül, eingesetzt. Als verzweigende bzw. kettenverlängende Additive werden niedermolekulare oder oligomere Verbindungen bevorzugt, die über mindestens zwei kettenverlängernd wirkende funktionelle Gruppen pro Molekül verfügen, welche mit primären und/oder sekundären Aminogruppen, und/oder Amidgruppen und/oder Carbonsäuregruppen reagieren können. Kettenverlängernd wirkende funktionelle Gruppen sind bevorzugt Isocyanate, Alkohole, blockierte Isocyanate, Epoxide, Maleinsäureanhydrid, Oxazoline, Oxazine, Oxazolone, wobei Epoxide bevorzugt sind.

Insbesondere bevorzugte di- oder mehrfunktionelle verzweigend oder kettenverlängernd wirkende Additive sind Diepoxide auf Basis Diglycidylether (Bisphenol und Epichlorhydrin), auf Basis von Aminepoxidharz (Anilin und Epichlorhydrin), auf Basis von Diglycidylester (cycloaliphatische Dicarbonsäuren und Epichlorhydrin) einzeln oder in Mischungen sowie 2,2-Bis[p-hydroxy-phenyl]-propan-diglycidylether, Bis-[p-(N-methyl-N-2,3-epoxy-propylamino)-phenyl]-methan sowie epoxidierte Fettsäureester des Glycerins, enthaltend mindestens zwei Epoxidgruppen pro Molekül.

Besonders bevorzugte di- oder mehrfunktionelle verzweigend oder kettenverlängernd wirkende Additive sind Glycidylether, ganz besonders bevorzugt Bisphenol A-Diglycidylether [CAS No. 98460-24-3] oder epoxidierte Fettsäureester des Glycerins, sowie auch ganz besonders bevorzugt epoxidiertes Sojaöl [CAS No. 8013-07-8] und/oder epoxidiertes Leinöl.

Bevorzugt als Komponente g) einzusetzende **Weichmacher** sind Phthalsäuredioctylester, Phthalsäuredibenzylester, Phthalsäurebutylbenzylester, Kohlenwasserstofföle oder N-(n-Butyl)benzolsulfonamid.

Als Komponente g) einzusetzende **Gleit- und/oder Entformungsmittel** sind bevorzugt langkettige Fettsäuren, insbesondere Stearinsäure oder Behensäure, deren Salze, insbesondere Ca- oder Zn-Stearat, sowie deren Esterderivate, insbesondere solche auf Basis von Pentaerythritol, insbesondere Fettsäureester des Pentaerythritols oder Amidderivate, insbesondere Ethylen-bis-stearylamid, Montanwachse sowie niedermolekulare Polyethylen- bzw. Polypropylenwachse.

Montanwachse im Sinne der vorliegenden Erfindung sind Mischungen aus geradkettigen, gesättigten Carbonsäuren mit Kettenlängen im Bereich von 28 bis 32 C-Atomen.

Erfindungsgemäß werden besonders bevorzugt Gleit- und/oder Entformungsmittel aus der Gruppe der Ester gesättigter oder ungesättigter aliphatischer Carbonsäuren mit 8 bis 40 C-Atomen mit aliphatischen gesättigten Alkoholen oder Amide von Aminen mit 2 bis 40 C-Atomen mit ungesättigten aliphatischen Carbonsäuren mit 8 bis 40 C-Atomen bzw. statt jeweils der Carbonsäuren Metallsalze gesättigter oder ungesättigter aliphatischer Carbonsäuren mit 8 bis 40 C-Atomen eingesetzt.

Ganz besonders bevorzugt als Komponente g) einzusetzende Gleit- und/oder Entformungsmittel sind auszuwählen aus der Gruppe Pentaerythritoltetrastearat [CAS No. 115-83-3], Ethylen-bis-stearylamid, Calciumstearat und Ethylenglycoldimontanat. Insbesondere bevorzugt wird Calciumstearat [CAS No. 1592-23-0] oder Ethylen-bis-stearylamid [CAS Nr. 110-30-5] eingesetzt. Insbesondere besonders bevorzugt wird Ethylen-bis-stearylamid (Loxiol® EBS von Emery Oleochemicals) eingesetzt.

Als Komponente g) bevorzugt einzusetzende **Laserabsorber** werden ausgewählt aus der Gruppe Zinnoxid, Zinnorthophosphat, Bariumtitanat, Aluminiumoxid, Kupferhydroxyphosphat, Kupferorthophosphat, Kaliumkupferdiphosphat, Kupferhydroxid, Bismuttrioxid, Zinn- und/oder Antimonoxid dotierte Glimmer und Antrachinon. Besonders bevorzugt ist Zinnoxid.

In einer alternativen Ausführungsform kann als Laserabsorber aber auch Antimonzinnoxid, Antimontrioxid oder Antimonpentoxid eingesetzt werden.

Der Laserabsorber kann direkt als Pulver oder in Form von Masterbatchen eingesetzt werden. Bevorzugte Masterbatche sind solche auf Basis von Polyamid und/oder Polyolefinen, bevorzugt Polyethylen. Ganz besonders bevorzugt wird der Laserabsorber in Form eines Polyamid 6-basierten Masterbatches eingesetzt.

Der Laserabsorber kann einzeln oder als Gemisch mehrerer Laserabsorber eingesetzt werden. Laserabsorber können Laserlicht einer bestimmten Wellenlänge absorbieren. In der Praxis liegt diese Wellenlänge im Bereich von 157 nm bis 10,6 $\mu$m. Beispiele für Laser dieser Wellenlängen sind in WO2009/003976 A1 beschrieben. Bevorzugt werden Nd:YAG Laser, mit denen Wellenlängen von 1064, 532, 355 und 266 nm realisiert werden können, und $CO_2$-Laser eingesetzt.

Gegenstand der vorliegenden Erfindung sind vorzugsweise **Zusammensetzungen** sowie darauf basierende **Erzeugnisse** enthaltend

a) wenigstens Polyamid 6 oder Polyamid 66,

b) wenigstens ein sekundäres aromatisches Amin der allgemeinen Formel (II)

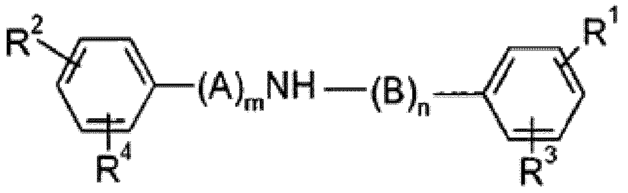

(II)

worin

m und n jeweils unabhängig voneinander für 0 oder 1 stehen,

A und B jeweils unabhängig voneinander für ein mit $C_1$-$C_4$-Alkyl- oder Phenyl-substituiertes tertiäres C-Atom stehen,

$R^1$ und $R^2$ jeweils unabhängig voneinander für Wasserstoff, für eine $C_1$-$C_6$-Alkylgruppe in ortho- und para-Stellung, welche gegeben falls durch 1 bis 3 Phenylreste substituiert sein kann, oder für Halogen, Carboxyl oder ein Metallsalz dieser Carboxylgruppe stehen,

$R^3$ und $R^4$ jeweils unabhängig voneinander für Wasserstoff oder für einen Methylrest in ortho- und para-Stellung stehen, oder für eine tertiäre $C_3$-$C_9$-Alkylgruppe in ortho oder para-Stellung stehen, welche gegebenenfalls durch 1 bis 3 Phenylreste substituiert sein kann,

c) wenigstens ein Phosphinsäurederivat der allgemeinen Formel (I),

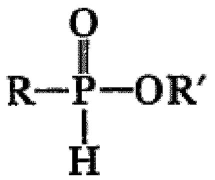

(I)

worin R für ein Wasserstoffatom oder für eine Alkyl-, Cycloalkyl- oder Aryl-Gruppe steht, und
R’ für ein Alkalimetall, ein Erdalkalimetall, ein Metall der 12. oder 13. Gruppe des Periodensystems der Elemente, ein Ammonium-Ion oder für eine $C_1$-$C_{10}$ Alkylgruppe steht,
und
d) Melamincyanurat,
mit der Maßgabe, dass auf 100 Massenanteile der Komponente a)
0,1 bis 3 Massenanteile, bevorzugt 0,3 bis 2 Massenanteile, besonders bevorzugt 0,35 bis 1.5 Massenanteile der Komponente b),
0,01 bis 1 Massenanteile, bevorzugt 0,05 bis 0,5 Massenanteile, besonders bevorzugt 0,07 bis 0,4 Massenanteile der Komponente c) und
2 bis 50 Massenanteile, bevorzugt 4 bis 30 Massenanteile, besonders bevorzugt 5 bis 20 Massenanteile, der Komponente d), eingesetzt werden.

Das Ammonium-Ion $NH_4^+$ für R’ ist ein Kation, das mit Anionen ähnlich wie AlkalimetallIonen Salze bildet. Es ist die konjugierte Säure zur Base Ammoniak ($NH_3$).

Gegenstand der vorliegenden Erfindung sind besonders bevorzugt **Zusammensetzungen** sowie darauf basierende **Erzeugnisse** enthaltend

a) wenigstens Polyamid 6 oder Polyamid 66,
b) wenigstens 4,4’-Bis(α,α-dimethylbenzyl)diphenylamin,
c) wenigstens ein Phosphinsäurederivat der allgemeinen Formel (I),

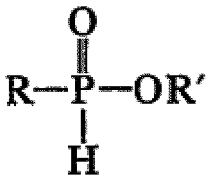

(I)

worin R für ein Wasserstoffatom oder für eine Alkyl-, Cycloalkyl- oder Aryl-Gruppe steht, und
R' für ein Alkalimetall, ein Erdalkalimetall, ein Metall der 12. oder 13. Gruppe des Periodensystems der Elemente, ein Ammonium-Ion oder für eine $C_1$-$C_{10}$ Alkylgruppe steht,
und
d) Melamincyanurat,
mit der Maßgabe, dass auf 100 Massenanteile der Komponente a)
0,1 bis 3 Massenanteile, bevorzugt 0,3 bis 2 Massenanteile, besonders bevorzugt 0,35 bis 1.5 Massenanteile der Komponente b),
0,01 bis 1 Massenanteile, bevorzugt 0,05 bis 0,5 Massenanteile, besonders bevorzugt 0,07 bis 0,4 Massenanteile der Komponente c) und
2 bis 50 Massenanteile, bevorzugt 4 bis 30 Massenanteile, besonders bevorzugt 5 bis 20 Massenanteile, der Komponente d), eingesetzt werden.

Gegenstand der vorliegenden Erfindung sind besonders bevorzugt **Zusammensetzungen** sowie darauf basierende **Erzeugnisse** enthaltend

a) wenigstens Polyamid 6 oder Polyamid 66,
b) wenigstens ein sekundäres aromatisches Amin der allgemeinen Formel (II)

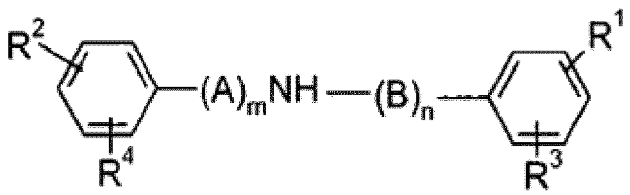

(II)

worin

m und n jeweils unabhängig voneinander für 0 oder 1 stehen,

A und B jeweils unabhängig voneinander für ein mit $C_1$-$C_4$-Alkyl- oder Phenyl- substituiertes tertiäres C-Atom stehen,

$R^1$ und $R^2$ jeweils unabhängig voneinander für Wasserstoff, für eine $C_1$-$C_6$-Alkylgruppe in ortho- und para-Stellung, welche gegeben falls durch 1 bis 3 Phenylreste substituiert sein kann, oder für Halogen, Carboxyl oder ein Metallsalz dieser Carboxylgruppe stehen,

$R^3$ und $R^4$ jeweils unabhängig voneinander für Wasserstoff oder für einen Methylrest in ortho- und para-Stellung stehen oder für eine tertiäre $C_3$-$C_9$-Alkylgruppe in ortho oder para-Stellung stehen, welche gegebenenfalls durch 1 bis 3 Phenylreste substituiert sein kann,

c) wenigstens Natriumhypophosphit und
d) Melamincyanurat,
mit der Maßgabe, dass auf 100 Massenanteile der Komponente a)
0,1 bis 3 Massenanteile, bevorzugt 0,3 bis 2 Massenanteile, besonders bevorzugt 0,35 bis 1.5 Massenanteile der Komponente b),
0,01 bis 1 Massenanteile, bevorzugt 0,05 bis 0,5 Massenanteile, besonders bevorzugt 0,07 bis 0,4 Massenanteile

der Komponente c) und
2 bis 50 Massenanteile, bevorzugt 4 bis 30 Massenanteile, besonders bevorzugt 5 bis 20 Massenanteile der Komponente d), eingesetzt werden.

Gegenstand der vorliegenden Erfindung sind ganz besonders bevorzugt **Zusammensetzungen** sowie darauf basierende **Erzeugnisse** enthaltend

a) wenigstens Polyamid 6 oder Polyamid 66,

b) wenigstens 4,4'-Bis($\alpha$,$\alpha$-dimethylbenzyl)diphenylamin,

c) wenigstens Natriumhypophosphit und

d) Melamincyanurat,
mit der Maßgabe, dass auf 100 Massenanteile der Komponente a)
0,1 bis 3 Massenanteile, bevorzugt 0,3 bis 2 Massenanteile, besonders bevorzugt 0,35 bis 1.5 Massenanteile der Komponente b),

0,01 bis 1 Massenanteile, bevorzugt 0,05 bis 0,5 Massenanteile, besonders bevorzugt 0,07 bis 0,4 Massenanteile der Komponente c) und
2 bis 50 Massenanteile, bevorzugt 4 bis 30 Massenanteile, besonders bevorzugt 5 bis 20 Massenanteile der Komponente d), eingesetzt werden.

Gegenstand der vorliegenden Erfindung sind auch **Zusammensetzungen** sowie darauf basierende **Erzeugnisse** enthaltend

a) 88 bis 92 Gew.-% wenigstens Polyamid 6 oder Polyamid 66,

b) 0,1 bis 1 Gew.-% wenigstens 4,4'-Bis($\alpha$,$\alpha$-dimethylbenzyl)diphenylamin,

c) 0,01 bis 1 Gew.-% wenigstens Natriumhypophosphit und

d) 4 bis 10 Gew.-% Melamincyanurat,

mit der Maßgabe, dass die Summe aller Gewichtsprozente stets 100 ist.

**Bevorzugte Verwendungen**

Die Erfindung betrifft vorzugsweise die **Verwendung** von Mischungen enthaltend als Komponente b) wenigstens ein **sekundäres aromatisches Amin** und als Komponente c) wenigstens ein **Phosphinsäurederivat** der allgemeinen Formel (I)

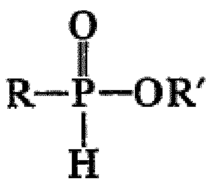

(I)

worin R für ein Wasserstoffatom oder für eine Alkyl-, Cycloalkyl- oder Aryl-Gruppe steht,
und

R' für ein Alkalimetall, ein Erdalkalimetall, ein Metall der 12. oder 13. Gruppe des Periodensystems der Elemente, ein Ammonium-Ion oder für eine $C_1$-$C_{10}$ Alkylgruppe steht, zur Herstellung flammwidrig ausgerüsteter Erzeugnisse mit der Maßgabe,

dass auf 100 Massenanteile wenigstens eines als Komponente a) einzusetzenden Polyamids, vorzugsweise Polyamid 6 oder Polyamid 66,

0,1 bis 3 Massenanteile, bevorzugt 0,3 bis 2 Massenanteile, besonders bevorzugt 0,35 bis 1.5 Massenanteile der Komponente b),

0,01 bis 1 Massenanteile, bevorzugt 0,05 bis 0,5 Massenanteile, besonders bevorzugt 0,07 bis 0,4 Massenanteile der Komponente c), und

2 bis 50 Massenanteile, bevorzugt 4 bis 30 Massenanteile, besonders bevorzugt 5 bis 20 Massenanteile Melamincyanurat eingesetzt werden,

wobei eine Verbesserung des Alterungsverhalten in Form eines verbesserten Farberhalts bzw. einer verbesserten Farbstabilität im Vergleich zu mit Melamincyanurat flammwidrig ausgerüsteten Polyamid basierten Erzeugnissen ohne die Kombination der Komponenten b) und c) erzielt wird und eine nach **ISO180-1U** (Izod) zu bestimmende Schlagzähigkeit nicht geringer ist, als ein entsprechendes Erzeugnis ohne die Komponente b) und c).

Das Ammonium-Ion $NH_4^+$ für R' ist ein Kation, das mit Anionen ähnlich wie AlkalimetallIonen Salze bildet. Es ist die konjugierte Säure zur Base Ammoniak ($NH_3$).

Wenn R in Formel (I) ein Wasserstoffatom darstellt, handelt es sich um Hypophosphorsäure, wenn R eine Alkyl-, Cycloalkyl- oder Aryl-Gruppe darstellt, handelt es sich um eine Phosphinsäure, wobei die Alkyl-, Cycloalkyl- oder Aryl-Gruppe vorzugsweise bis zu 12 Kohlenstoffatome umfasst.

Wenn R in Formel (I) eine Alkyl-, Cycloalkyl- oder Aryl-Gruppe darstellt, werden bevorzugt Salze und Ester der Phoshinsäure eingesetzt. Bevorzugt werden Salze der Phosphinsäure eingesetzt, wobei es sich auch um Hydrate der Salze handeln kann. Ganz besonders bevorzugt sind Alkali-, Erdalkalimetallsalze sowie Metallsalze der 12. und 13. Gruppe des Periodensystems der Phosphinsäure, wobei es sich auch um Hydrate der Salze handeln kann.

Wenn R in Formel (I) ein Wasserstoffatom ist, handelt es sich um Hypophosphorsäure. Bevorzugt werden Salze und Ester der Hypophosphorsäure eingesetzt. Besonders bevorzugt werden Alkali-, Erdalkalimetallsalze sowie Metallsalze der 12. und 13. Gruppe des Periodensystems der Hypophosphorsäure eingesetzt. Insbesondere bevorzugt werden Alkalimetallsalze der Hypophosphorsäure eingesetzt, wobei es sich auch um Hydrate der Salze handeln kann.

Zur Klarstellung sei angemerkt, dass die zu den Zusammensetzungen genannten bevorzugten Ausführungsformen für die erfindungsgemäße Verwendung gleichermaßen gelten. Zur Klarstellung sei angemerkt, dass vom Rahmen dieser Erfindung alle aufgeführten, allgemeinen oder in Vorzugsbereichen genannten Definitionen und Parameter in beliebigen Kombinationen umfasst sind.

Die Erfindung betrifft besonders bevorzugt die **Verwendung** von Mischungen enthaltend b) wenigstens ein **sekundäres aromatisches Amin** und
c) wenigstens ein **Phosphinsäurederivat** der allgemeinen Formel (I)

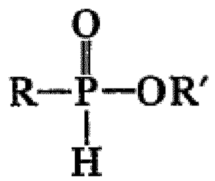

(I)

worin R für ein Wasserstoffatom oder für eine Alkyl-, Cycloalkyl- oder Aryl-Gruppe steht,
und

R' für ein Alkalimetall, ein Erdalkalimetall, ein Metall der 12. oder 13. Gruppe des Periodensystems der Elemente, ein Ammonium-Ion oder für eine $C_1$-$C_{10}$ Alkylgruppe steht, zur Herstellung flammwidrig ausgerüsteter Erzeugnisse mit der Maßgabe,

dass auf 100 Massenanteile wenigstens eines als Komponente a) einzusetzenden Polyamids, vorzugsweise Polyamid 6 oder Polyamid 66,

0,1 bis 3 Massenanteile, bevorzugt 0,3 bis 2 Massenanteile, besonders bevorzugt 0,35 bis 1.5 Massenanteile der Komponente b),

0,01 bis 1 Massenanteile, bevorzugt 0,05 bis 0,5 Massenanteile, besonders bevorzugt 0,07 bis 0,4 Massenanteile der Komponente c), und

2 bis 50 Massenanteile, bevorzugt 4 bis 30 Massenanteile, besonders bevorzugt 5 bis 20 Massenanteile Melamincyanurat eingesetzt werden,

wobei eine Verbesserung des Alterungsverhalten in Form eines verbesserten Farberhalts bzw. einer verbesserten Farbstabilität im Vergleich zu mit Melamincyanurat flammwidrig ausgerüsteten Polyamid basierten Erzeugnissen ohne die Kombination der Komponenten b) und c) erzielt wird und eine nach **IS0180-1U** (Izod) zu bestimmende Schlagzähigkeit nicht geringer ist, als ein entsprechendes Erzeugnis ohne die Komponente b) und c) und als Komponente b) ein sekundäres aromatisches Amin der allgemeinen Formel (II)

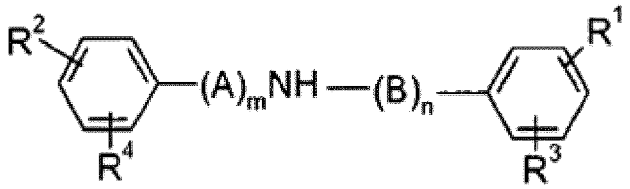

(II)

eingesetzt wird, worin

m und n jeweils unabhängig voneinander für 0 oder 1 stehen,

A und B jeweils unabhängig voneinander für ein mit $C_1$-$C_4$-Alkyl- oder Phenyl-substituiertes tertiäres C-Atom stehen,

$R^1$ und $R^2$ jeweils unabhängig voneinander für Wasserstoff, für eine $C_1$-$C_6$-Alkylgruppe in ortho- und para-Stellung, welche gegeben falls durch 1 bis 3 Phenylreste substituiert sein kann, oder für Halogen, Carboxyl oder ein Metallsalze dieser Carboxylgruppe stehen,

$R^3$ und $R^4$ jeweils unabhängig voneinander für Wasserstoff oder für einen Methylrest in ortho- und para-Stellung stehen, oder für eine tertiäre $C_3$-$C_9$-Alkylgruppe in ortho oder para-Stellung stehen, welche gegebenenfalls durch 1 bis 3 Phenylreste substituiert sein kann.

Die Erfindung betrifft ganz besonders bevorzugt die **Verwendung** von Mischungen enthaltend

b) wenigstens 4,4'-Bis(α,α-dimethylbenzyl)diphenylamin und

c) wenigstens ein **Phosphinsäurederivat** der allgemeinen Formel (I)

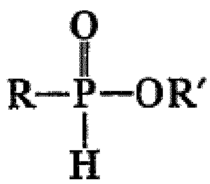

(I)

worin R für ein Wasserstoffatom oder für eine Alkyl-, Cycloalkyl- oder Aryl-Gruppe steht, und

R' für ein Alkalimetall, ein Erdalkalimetall, ein Metall der 12. oder 13. Gruppe des Periodensystems der Elemente, ein Ammonium-Ion oder für eine $C_1$-$C_{10}$ Alkylgruppe steht, zur Herstellung flammwidrig ausgerüsteter Erzeugnisse mit der Maßgabe,

dass auf 100 Massenanteile wenigstens eines als Komponente a) einzusetzenden Polyamids, vorzugsweise Polyamid 6 oder Polyamid 66,

0,1 bis 3 Massenanteile, bevorzugt 0,3 bis 2 Massenanteile, besonders bevorzugt 0,35 bis 1.5 Massenanteile der Komponente b),

0,01 bis 1 Massenanteile, bevorzugt 0,05 bis 0,5 Massenanteile, besonders bevorzugt 0,07 bis 0,4 Massenanteile der Komponente c), und

2 bis 50 Massenanteile, bevorzugt 4 bis 30 Massenanteile, besonders bevorzugt 5 bis 20 Massenanteile Melamincyanurat eingesetzt werden,

wobei eine Verbesserung des Alterungsverhalten in Form eines verbesserten Farberhalts bzw. einer verbesserten Farbstabilität im Vergleich zu mit Melamincyanurat flammwidrig ausgerüsteten Polyamid basierten Erzeugnissen ohne die Kombination der Komponenten b) und c) erzielt wird und eine nach **ISO180-1U** (Izod) zu bestimmende Schlagzähigkeit nicht geringer ist, als ein entsprechendes Erzeugnis ohne die Komponente b) und c).

Die Erfindung betrifft insbesondere die **Verwendung** von Mischungen enthaltend

b) wenigstens 4,4'-Bis($\alpha$,$\alpha$-dimethylbenzyl)diphenylamin und

c) wenigstens Natriumhypophosphit zur Herstellung flammwidrig ausgerüsteter Erzeugnisse mit der Maßgabe, dass auf 100 Massenanteile wenigstens eines als Komponente a) einzusetzenden Polyamids, vorzugsweise Polyamid 6 oder Polyamid 66,
0,1 bis 3 Massenanteile, bevorzugt 0,3 bis 2 Massenanteile, besonders bevorzugt 0,35 bis 1.5 Massenanteile der Komponente b),
0,01 bis 1 Massenanteile, bevorzugt 0,05 bis 0,5 Massenanteile, besonders bevorzugt 0,07 bis 0,4 Massenanteile der Komponente c), und
2 bis 50 Massenanteile, bevorzugt 4 bis 30 Massenanteile, besonders bevorzugt 5 bis 20 Massenanteile Melamincyanurat eingesetzt werden,
wobei eine Verbesserung des Alterungsverhalten in Form eines verbesserten Farberhalts bzw. einer verbesserten Farbstabilität im Vergleich zu mit Melamincyanurat flammwidrig ausgerüsteten Polyamid basierten Erzeugnissen ohne die Kombination der Komponenten b) und c) erzielt wird und eine nach **ISO180-1U** (Izod) zu bestimmende Schlagzähigkeit nicht geringer ist, als ein entsprechendes Erzeugnis ohne die Komponente b) und c).

Die Erfindung betrifft insbesondere ganz besonders bevorzugt die **Verwendung** von Mischungen enthaltend b) wenigstens 4,4'-Bis($\alpha$,$\alpha$-dimethylbenzyl)diphenylamin und c) wenigstens Natriumhypophosphit zur Herstellung flammwidrig ausgerüsteter Erzeugnisse mit der Maßgabe,
dass auf 88 bis 92 Gew.-% wenigstens eines als Komponente a) einzusetzenden Polyamids, vorzugsweise Polyamid 6 oder Polyamid 66,
0,1 bis 1 Gew.-% der Komponente b),
0,01 bis 1 Gew.-% der Komponente c), und
4 bis 10 Gew.-% Melamincyanurat eingesetzt werden, wobei die Summe aller Gewichtsprozente stets 100 ist und eine Verbesserung des Alterungsverhalten in Form eines verbesserten Farberhalts bzw. einer verbesserten Farbstabilität im Vergleich zu mit Melamincyanurat flammwidrig ausgerüsteten Polyamid basierten Erzeugnissen ohne die Kombination der Komponenten b) und c) erzielt wird und eine nach **ISO180-1U** (Izod) zu bestimmende Schlagzähigkeit nicht geringer ist, als ein entsprechendes Erzeugnis ohne die Komponenten b) und c).

**Bevorzugte Verfahren**

Die Erfindung betrifft vorzugsweise ein **Verfahren** zur Verbesserung des Farberhalts bzw. der Farbstabilität im Vergleich zu mit Melamincyanurat flammwidrig ausgerüsteten Polyamid basierten Erzeugnissen ohne die Kombination der Komponenten b) und c) und einer nach **ISO180-1U** (Izod) zu bestimmenden Schlagzähigkeit, die nicht geringer ist, als ein entsprechendes Erzeugnis ohne die Komponente b) und c), indem man Mischungen enthaltend

b) wenigstens ein sekundäres aromatisches Amin und

c) wenigstens ein Phosphinsäurederivat der allgemeinen Formel (I)

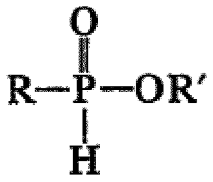

(I)

worin R für ein Wasserstoffatom oder für eine Alkyl-, Cycloalkyl- oder Aryl-Gruppe steht, und R' für ein Alkalimetall, ein Erdalkalimetall, ein Metall der 12. oder 13. Gruppe des Periodensystems der Elemente, ein Ammonium-Ion oder für eine $C_1$-$C_{10}$ Alkylgruppe steht,
in mit Melamincyanurat flammwidrig ausgerüsteten Polyamid basierten Erzeugnissen einsetzt mit der Maßgabe, dass man auf 100 Massenanteile wenigstens eines als der Komponente a) einzusetzenden Polyamids, vorzugsweise Polyamid 6 oder Polyamid 66,
0,1 bis 3 Massenanteile, bevorzugt 0,3 bis 2 Massenanteile, besonders bevorzugt 0,35 bis 1.5 Massenanteile der Komponente b),
0,01 bis 1 Massenanteile, bevorzugt 0,05 bis 0,5 Massenanteile, besonders bevorzugt 0,07 bis 0,4 Massenanteile der Komponente c) und
2 bis 50 Massenanteile, bevorzugt 4 bis 30 Massenanteile, besonders bevorzugt 5 bis 20 Massenanteile, Melamincyanurat als Komponente d) einsetzt.

Das Ammonium-Ion $NH_4^+$ für R' ist ein Kation, das mit Anionen ähnlich wie AlkalimetallIonen Salze bildet. Es ist die konjugierte Säure zur Base Ammoniak ($NH_3$).
Wenn R in Formel (I) ein Wasserstoffatom darstellt, handelt es sich um Hypophosphorsäure. Wenn R in Formel (I) eine Alkyl-, Cycloalkyl- oder Aryl-Gruppe darstellt, handelt es sich um eine Phosphinsäure, wobei die Alkyl-, Cycloalkyl- oder Aryl-Gruppe vorzugsweise bis zu 12 Kohlenstoffatome umfasst.
Wenn R in Formel (I) eine Alkyl-, Cycloalkyl- oder Aryl-Gruppe darstellt, werden bevorzugt Salze und Ester der Phoshinsäure eingesetzt. Erfindungsgemäß bevorzugt werden Salze der Phosphinsäure eingesetzt, wobei es sich auch um Hydrate der Salze handeln kann. Ganz besonders bevorzugt sind Alkali-, Erdalkalimetallsalze sowie Metallsalze der 12. oder 13. Gruppe des Periodensystems der Phosphinsäure, wobei es sich auch um Hydrate der Salze handeln kann.
Wenn R in Formel (I) ein Wasserstoffatom ist, handelt es sich um Hypophosphorsäure, wovon bevorzugt deren Salze oder Ester eingesetzt werden. Besonders bevorzugt werden Alkali-, Erdalkalimetallsalze, Salze mit Ammonium Ion als Kation, sowie Metallsalze der 12. oder 13. Gruppe des Periodensystems der Hypophosphorsäure eingesetzt. Insbesondere bevorzugt werden Alkalimetallsalze der Hypophosphorsäure eingesetzt, wobei es sich auch um Hydrate der Salze handeln kann.
Zur Klarstellung sei angemerkt, dass die zu den Zusammensetzungen genannten bevorzugten Ausführungsformen für die erfindungsgemäße Verwendung gleichermaßen gelten. Zur Klarstellung sei angemerkt, dass vom Rahmen dieser Erfindung alle aufgeführten, allgemeinen oder in Vorzugsbereichen genannten Definitionen und Parameter in beliebigen Kombinationen umfasst sind.
Die Erfindung betrifft besonders bevorzugt ein **Verfahren** zur Verbesserung des Farberhalts bzw. der Farbstabilität im Vergleich zu mit Melamincyanurat flammwidrig ausgerüsteten Polyamid basierten Erzeugnissen ohne die Kombination der Komponenten b) und c) und einer nach **IS0180-1U** (Izod) zu bestimmenden Schlagzähigkeit, die nicht geringer ist, als ein entsprechendes Erzeugnis ohne die Komponente b) und c), indem man Mischungen enthaltend

b) wenigstens ein sekundäres aromatisches Amin und

c) wenigstens ein Phosphinsäurederivat der allgemeinen Formel (I)

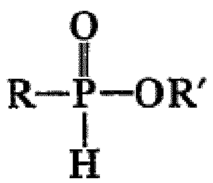

(I)

worin R für ein Wasserstoffatom oder für eine Alkyl-, Cycloalkyl- oder Aryl-Gruppe steht, und R' für ein Alkalimetall, ein Erdalkalimetall, ein Metall der 12. oder 13. Gruppe des Periodensystems der Elemente, ein Ammonium-Ion oder

für eine $C_1$-$C_{10}$ Alkylgruppe steht,
in mit Melamincyanurat flammwidrig ausgerüsteten Polyamid basierten Erzeugnissen einsetzt mit der Maßgabe, dass man auf 100 Massenanteile wenigstens eines als der Komponente a) einzusetzenden Polyamids, vorzugsweise Polyamid 6 oder Polyamid 66,
0,1 bis 3 Massenanteile, bevorzugt 0,3 bis 2 Massenanteile, besonders bevorzugt 0,35 bis 1.5 Massenanteile der Komponente b),
0,01 bis 1 Massenanteile, bevorzugt 0,05 bis 0,5 Massenanteile, besonders bevorzugt 0,07 bis 0,4 Massenanteile der Komponente c) und
2 bis 50 Massenanteile, bevorzugt 4 bis 30 Massenanteile, besonders bevorzugt 5 bis 20 Massenanteile, Melamincyanurat als Komponente d) einsetzt und als sekundäres aromatisches Amin wenigstens eines der allgemeinen Formel (II)

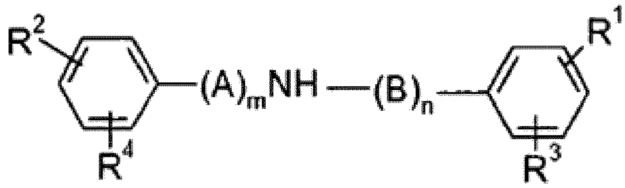

(II)

eingesetzt wird, worin

m und n jeweils unabhängig voneinander für 0 oder 1 stehen,

A und B jeweils unabhängig voneinander für ein mit $C_1$-$C_4$-Alkyl- oder Phenyl-substituiertes tertiäres C-Atom stehen,

$R^1$ und $R^2$ jeweils unabhängig voneinander für Wasserstoff, für eine $C_1$-$C_6$-Alkylgruppe in ortho- und para-Stellung, welche gegeben falls durch 1 bis 3 Phenylreste substituiert sein kann, oder für Halogen, Carboxyl oder ein Metallsalze dieser Carboxylgruppe stehen,

$R^3$ und $R^4$ jeweils unabhängig voneinander für Wasserstoff oder für einen Methylrest in ortho- und para-Stellung stehen oder für eine tertiäre $C_3$-$C_9$-Alkylgruppe in ortho oder para-Stellung stehen, welche gegebenenfalls durch 1 bis 3 Phenylreste substituiert sein kann.

Die Erfindung betrifft besonders bevorzugt ein **Verfahren** zur Verbesserung des Farberhalts bzw. der Farbstabilität im Vergleich zu mit Melamincyanurat flammwidrig ausgerüsteten Polyamid basierten Erzeugnissen ohne die Kombination der Komponenten b) und c) und einer nach **IS0180-1U** (Izod) zu bestimmenden Schlagzähigkeit, die nicht geringer ist, als ein entsprechendes Erzeugnis ohne die Komponente b) und c), indem man Mischungen enthaltend

b) wenigstens ein sekundäres aromatisches Amin und

c) wenigstens Natriumhypophosphit
in mit Melamincyanurat flammwidrig ausgerüsteten Polyamid basierten Erzeugnissen einsetzt mit der Maßgabe, dass man auf 100 Massenanteile wenigstens eines als der Komponente a) einzusetzenden Polyamids, vorzugsweise Polyamid 6 oder Polyamid 66,
0,1 bis 3 Massenanteile, bevorzugt 0,3 bis 2 Massenanteile, besonders bevorzugt 0,35 bis 1.5 Massenanteile der Komponente b),
0,01 bis 1 Massenanteile, bevorzugt 0,05 bis 0,5 Massenanteile, besonders bevorzugt 0,07 bis 0,4 Massenanteile der Komponente c) und
2 bis 50 Massenanteile, bevorzugt 4 bis 30 Massenanteile, besonders bevorzugt 5 bis 20 Massenanteile, Melamincyanurat als Komponente d) einsetzt und als sekundäres aromatisches Amin wenigstens eines der allgemeinen Formel (II)

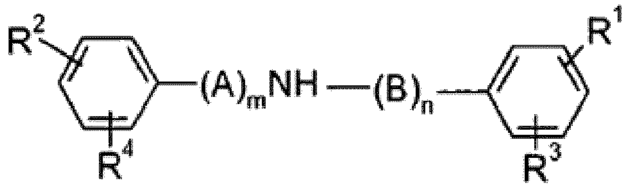

(II)

eingesetzt wird, worin

m und n jeweils unabhängig voneinander für 0 oder 1 stehen,

A und B jeweils unabhängig voneinander für ein mit $C_1$-$C_4$-Alkyl- oder Phenyl-substituiertes tertiäres C-Atom stehen,

$R^1$ und $R^2$ jeweils unabhängig voneinander für Wasserstoff, für eine $C_1$-$C_6$-Alkylgruppe in ortho- und para-Stellung, welche gegeben falls durch 1 bis 3 Phenylreste substituiert sein kann, oder für Halogen, Carboxyl oder ein Metallsalze dieser Carboxylgruppe stehen,

$R^3$ und $R^4$ jeweils unabhängig voneinander für Wasserstoff oder für einen Methylrest in ortho- und para-Stellung stehen, oder für eine tertiäre $C_3$-$C_9$-Alkylgruppe in ortho oder para-Stellung stehen, welche gegebenenfalls durch 1 bis 3 Phenylreste substituiert sein kann.

Die Erfindung betrifft ganz besonders bevorzugt ein **Verfahren** zur Verbesserung des Farberhalts bzw. der Farbstabilität im Vergleich zu mit Melamincyanurat flammwidrig ausgerüsteten Polyamid basierten Erzeugnissen ohne die Kombination der Komponenten b) und c) und einer nach **IS0180-1U** (Izod) zu bestimmenden Schlagzähigkeit, die nicht geringer ist, als ein entsprechendes Erzeugnis ohne die Komponente b) und c), indem man Mischungen enthaltend

b) wenigstens 4,4'-Bis($\alpha$,$\alpha$-dimethylbenzyl)diphenylamin und

c) wenigstens Natriumhypophosphit
in mit Melamincyanurat flammwidrig ausgerüsteten Polyamid basierten Erzeugnissen einsetzt mit der Maßgabe, dass man auf 100 Massenanteile wenigstens eines als der Komponente a) einzusetzenden Polyamids, vorzugsweise Polyamid 6 oder Polyamid 66,
0,1 bis 3 Massenanteile, bevorzugt 0,3 bis 2 Massenanteile, besonders bevorzugt 0,35 bis 1.5 Massenanteile der Komponente b),
0,01 bis 1 Massenanteile, bevorzugt 0,05 bis 0,5 Massenanteile, besonders bevorzugt 0,07 bis 0,4 Massenanteile der Komponente c) und
2 bis 50 Massenanteile, bevorzugt 4 bis 30 Massenanteile, besonders bevorzugt 5 bis 20 Massenanteile, Melamincyanurat als Komponente d) einsetzt.

Die Erfindung betrifft insbesondere ganz besonders bevorzugt ein **Verfahren** zur Verbesserung des Farberhalts bzw. der Farbstabilität im Vergleich zu mit Melamincyanurat flammwidrig ausgerüsteten Polyamid basierten Erzeugnissen ohne die Kombination der Komponenten b) und c) und einer nach **IS0180-1U** (Izod) zu bestimmenden Schlagzähigkeit, die nicht geringer ist, als ein entsprechendes Erzeugnis ohne die Komponenten b) und c), indem man Mischungen enthaltend

b) wenigstens 4,4'-Bis($\alpha$,$\alpha$-dimethylbenzyl)diphenylamin und

c) wenigstens Natriumhypophosphit
in mit Melamincyanurat flammwidrig ausgerüsteten Polyamid basierten Erzeugnissen einsetzt mit der Maßgabe, dass auf 88 bis 92 Gew.-% wenigstens eines als Komponente a) einzusetzenden Polyamids, vorzugsweise Polyamid 6 oder Polyamid 66,
0,1 bis 1 Gew.-% der Komponente b),
0,01 bis 1 Gew.-% der Komponente c), und
4 bis 10 Gew.-% Melamincyanurat eingesetzt werden, wobei die Summe aller Gewichtsprozente stets 100 ist.

Gegenstand der vorliegenden Anmeldung ist auch die Verwendung bzw. Verarbeitung der aus den erfindungsgemäß einzusetzenden Komponenten herzustellenden Formmassen im Extrusionsprozess, in Blasformverfahren oder im Spritzguss zur Herstellung von Erzeugnissen, bevorzugt von Formteilen oder Halbzeugen, insbesondere mittels Spritzguss.

Erfindungsgemäße Verarbeitungsverfahren zur Herstellung von Erzeugnissen mittels Extrusion, Blasformen oder Spritzguss werden bei Schmelzetemperaturen im Bereich von 230 bis 330°C, bevorzugt von 250 bis 300°C sowie gegebenenfalls zusätzlich bei Drücken von maximal 2500 bar, bevorzugt bei Drücken von maximal 2000 bar, besonders bevorzugt bei Drücken von maximal 1500 bar und ganz besonders bevorzugt bei Drücken von maximal 750 bar durchgeführt.

Bei der Extrusion, auch als Strangpressen bezeichnet, werden feste bis dickflüssige härtbare thermoplastische Formmassen unter Druck kontinuierlich aus einer formgebenden Öffnung, vorzugsweise als Düse, Matrize oder Mundstück bezeichnet, herausgepresst. Dabei entstehen Erzeugnisse mit dem Querschnitt der Öffnung in theoretisch beliebiger Länge **(http://de.wikipedia.org/wiki/Extrusion_(Verfahrenstechnik).** Die grundsätzlichen Verfahrensschritte des Profil-Extrusionsverfahrens, einer Verfahrensform der Extrusion, sind:

1. Plastifizieren und Bereitstellen der thermoplastischen Schmelze in einem Extruder,

2. Extrusion des thermoplastischen Schmelzestrangs durch eine Kalibrierhülse, die den Querschnitt des zu extrudierenden Profils aufweist,

3. Abkühlung des extrudierten Profils in einem Kalibriertisch,

4. Weitertransport des Profils mit einem Abzug hinter dem Kalibriertisch,

5. Ablängen des zuvor endlosen Profils in einer Schneideanlage,

6. Sammeln der abgelängten Profile an einem Sammeltisch.

Eine Beschreibung der Profilextrusion von Polyamid 6 und Polyamid 66 erfolgt in Kunststoff-Handbuch 3/4, Polyamide, Carl Hanser Verlag, München 1998, Seite 374-384**.**

Das Verfahren des Blasformens ist beispielsweise in **http://www.blasformen.com/** beschrieben. Beim Blasformen wird im ersten Verfahrensschritt mittels eines beheizten Extruders Kunststoffgranulat eingezogen, verdichtet, entgast, aufgeheizt, plastifiziert und zu einem plastischen Kunststoffstrang homogenisiert. Im nächsten Schritt wird die Kunststoffmasse in einen an den Extruder angeflanschten Schlauchkopf geführt. Dort wird die Kunststoffschmelze zu einem Schlauch geformt, der senkrecht aus einer Düse nach unten austritt. Der Schlauchdurchmesser wird mit unterschiedlich großen Dorn- und Düsennormalien, die an den Schlauchkopf angeflanscht werden, an den zu fertigenden Artikel angepasst. Die Schlauchdicke und das daraus resultierende Gewicht der Blasformteile wird durch die Auswahl von unterschiedlichen Durchmesser-Differenzen von Dorn zu Düse vorbestimmt.

Der Spritzguss zeichnet sich dadurch aus, dass der Rohstoff, also die zu verarbeitende thermoplastische Formmasse enthaltend die erfindungsgemäß einzusetzenden Komponenten, bevorzugt in Granulatform, in einem beheizten zylindrischen Hohlraum aufgeschmolzen (plastifiziert) und als Spritzmasse unter Druck in einem temperierten Hohlraum gespritzt wird. Nach dem Abkühlen (Erstarren) der Masse wird das Spritzgussteil entformt.

Man unterscheidet

1. Plastifizieren / Aufschmelzen

2. Einspritzphase (Füllvorgang)

3. Nachdruckphase (wegen thermischer Kontraktion bei der Kristallisation)

4. Entformen.

Eine Spritzgießmaschine besteht aus einer Schließeinheit, der Spritzeinheit, dem Antrieb und der Steuerung. Zur Schließeinheit gehören feste und bewegliche Aufspannplatten für das Werkzeug, eine Stirnplatte sowie Säulen und Antrieb der beweglichen Werkzeugaufspannplatte (Kniehebelgelenk oder hydraulische Schließeinheit).

Eine Spritzeinheit umfasst den elektrisch beheizbaren Zylinder, den Antrieb der Schnecke (Motor, Getriebe)

und die Hydraulik zum Verschieben der Schnecke und Spritzeinheit. Die Aufgabe der Spritzeinheit besteht darin, das Pulver bzw. das Granulat aufzuschmelzen, zu dosieren, einzuspritzen und nachzudrücken (wegen Kontraktion). Das Problem des Rückflusses der Schmelze innerhalb der Schnecke (Leckströmung) wird durch Rückstromsperren gelöst.

Im Spritzgießwerkzeug wird dann die einströmende Schmelze der zu verarbeitenden und die erfindungsgemäß einzusetzenden Komponenten enthaltenden Formmasse gelöst, gekühlt und somit das zu fertigende Bauteil gefertigt. Notwendig dazu sind immer wenigstens zwei Werkzeughälften. Beim Spritzguss unterscheidet man folgende Funktionskomplexe:

- Angusssystem
- Formbildende Einsätze
- Entlüftung
- Maschinen- und Kraftaufnahme
- Entformungssystem und Bewegungsübertragung
- Temperierung

Im Gegensatz zum Spritzguss wird bei der Extrusion ein endlos geformter Strang aus der erfindungsgemäß einzusetzenden Formmasse im Extruder eingesetzt, wobei der Extruder eine Maschine zur Herstellung von Erzeugnissen auf Basis thermoplastischer Formstücke ist. Man unterscheidet Einschneckenextruder und Doppelschneckenextruder sowie die jeweiligen Untergruppen, konventioneller Einschneckenextruder, förderwirksamer Einschneckenextruder, gegenläufiger Doppelschneckenextruder und gleichläufiger Doppelschneckenextruder.

Extrusionsanlagen zum Herstellen von Profilen bestehen aus: Extruder, Profil-Werkzeug, Kalibrierung, Kühlstrecke, Raupen- und Rollenabzug, Trennvorrichtung und Kipprinne. Die vorliegende Erfindung betrifft folglich auch Erzeugnisse, bevorzugt Formteile, Formkörper oder Halbzeuge, erhältlich durch Extrusion oder Spritzguss der erfindungsgemäßen, wenigstens die Komponenten a), b), c) und d) sowie gegebenenfalls e) und gegebenenfalls f) enthaltenden Formmassen.

Die Zubereitung erfindungsgemäß einzusetzender Zusammensetzungen für die Herstellung von im Spritzguss, in der Extrusion oder zum Blasformen einzusetzender Formmassen erfolgt durch Mischen der einzelnen Komponenten a), b), c) und d) sowie gegebenenfalls weiterer Komponenten in wenigstens einem Mischaggregat, vorzugsweise einem Compounder, besonders bevorzugt einem gleichsinnig drehenden Zweiwellenextruder. Durch diesen Mischvorgang, auch als Compoundieren bezeichnet, werden als Zwischenprodukte Formmassen erhalten, die in Form von Pulvern, Granulaten oder in Strangform einer weiteren Verarbeitung zur Verfügung gestellt werden. Diese Formmassen - auch als thermoplastische Formmassen bezeichnet - können entweder ausschließlich aus den Komponenten a), b), c) und d) bestehen, oder ggf. weitere Komponenten, vorzugsweise e) und/oder f) enthalten.

Die vorliegende Erfindung betrifft schließlich auch die Verwendung der durch Extrusion oder Spritzguss aus Formmassen, enthaltend wenigstens die Komponenten a), b), c) und d) sowie ggf. e) und ggf. f) hergestellten Erzeugnisse, bevorzugt Formteile, Formkörper oder Halbzeuge, für elektrische oder elektronische Bauteile. Diese erfindungsgemäßen Erzeugnisse können bevorzugt in der Kraftfahrzeug-, Elektro-, Elektronik-, Telekommunikations-, Solar-, Informationstechnologie-, Computer- Industrie, im Haushalt, Sport, in der Medizin oder in der Unterhaltungsindustrie angewandt werden. Insbesondere können erfindungsgemäße Erzeugnisse für Anwendungen eingesetzt werden, bei denen eine Langzeitfarbstabilität erforderlich ist. Bevorzugt für derartige Anwendungen ist die Verwendung für Erzeugnisse in der Elektrotechnik und in Fahrzeugen, insbesondere Hochvoltkomponenten in Fahrzeugen, insbesondere in Kraftfahrzeugen (KFZ).

## Beispiele

Zum Nachweis der erfindungsgemäß beschriebenen Verbesserungen der Eigenschaften wurden zunächst durch Compoundierung entsprechende Polyamid basierte Polymerzusammensetzungen angefertigt. Die einzelnen Komponenten wurden hierzu in einem Zweiwellenextruder (ZSK 26 Compounder der Fa. Coperion Werner & Pfleiderer, Stuttgart, Deutschland)) bei Temperaturen zwischen 250 und 280°C gemischt, als Strang ausgetragen, bis zur Granulierbarkeit abgekühlt und granuliert. Nach dem Trocknen, in der Regel zwei Tage bei 80°C im Vakuumtrockenschrank, erfolgte die Verarbeitung des Granulats bei Temperaturen im Bereich von 250 bis 270°C zu Normprüfkörpern für die jeweiligen Prüfungen.

Die Schlagzähigkeit nach **ISO 180-1U** (Izod) wurde an spritzgegossenen nach **DIN EN ISO 1874-2** festgelegten

Prüfkörpern im spritzfrischen Zustand bei 23°C und -30°C bestimmt. Der spritzfrische Zustand, auch "dry as moulded", wird in der **DIN EN ISO 1874-2** definiert.

Der Lab-Farbraum (auch: CIELAB, CIEL*a*b*, Lab-Farben) beschreibt alle wahrnehmbaren Farben. Er nutzt einen dreidimensionalen Farbenraum, bei dem der Helligkeitswert L senkrecht auf der Farbebene (a, b) steht. Die L*-Achse beschreibt die Helligkeit (Luminanz) der Farbe mit Werten von 0 bis 100. In der Darstellung steht diese im Nullpunkt senkrecht auf der a*b*-Ebene. Sie kann auch als Neutralgrauachse bezeichnet werden, denn zwischen den Endpunkten Schwarz (L*=0) und Weiß (L*=100) sind alle unbunten Farben (Grautöne) enthalten. In Analogie zur Gegenfarbtheorie von Ewald Hering gibt die a-Koordinate die Farbart und Farbintensität zwischen Grün und Rot an und die b-Koordinate die Farbart und die Farbintensität zwischen Blau und Gelb. Je größer positive a- und b- und je kleiner negative a- und b-Werte, umso intensiver der Farbton. Falls a=0 und b=0, liegt ein unbunter Farbton auf der Helligkeitsachse vor. In den üblichen Softwareumsetzungen kann L Werte zwischen 0 und 100 annehmen und a und b können zwischen -128 und 127 variiert werden. Die Verfärbung von Polymer basierten Erzeugnisses durch die oxidative Schädigung der Polymermatrix kann durch die Veränderung der Helligkeit L über die Lagerungszeit bei hoher Temperatur bestimmt werden.

Im Rahmen der vorliegenden Erfindung erfolgte die Prüfung des Alterungsverhaltens in Form eines verbesserten Farberhalts bzw. einer verbesserten Farbstabilität durch Lagerung von spritzgegossenen Polyamid basierten Platten von 60mm • 40mm • 4 mm in einem Materialprüfschrank des Modells Binder FP115 bei Umluft bei Temperaturen von 150°C. Als Maß für die Verfärbung wurde der zuvor beschriebene Farbabstand **ΔE** spritzgegossener Erzeugnisse auf Basis erfindungsgemäßer Polymerzusammensetzungen gemäß **Tab. 1** vor und nach 1000 stündiger Heißluftalterung bei 140°C gemessen. Die Farbmessung erfolgte dabei mit dem Spektralfotometer CM-2600d der Fa. Konica Minolta mit der CIE-Normlichtart D65 in Reflektion (10° Beobachterwinkel) mit Glanzeinschluss (SCI=Specular Component Included) .

Die Flammwidrigkeit der Faser-Matrix-Halbzeuge wurde nach der Methode UL94V (Underwriters Laboratories Inc. Standard of Safety, "Test for Flammability of Plastic Materials for Parts in Devices and Appliances", S. 14 bis S. 18 Northbrook 1998) bestimmt. Die Prüfkörper hatten die Abmessung 125 mm • 13 mm • 0,75 mm.

**Edukte:**

| | |
|---|---|
| Komponente a) | Polyamid 6 (Durethan® B26, Fa. Lanxess Deutschland GmbH) |
| Komponente b) | 4,4'-Bis(a,a-dimethylbenzyl)diphenylamin, CAS No. 10081-67-1 (Rianox® 445 der Firma Rianlon Corporation) |
| Komponente c) | Natriumhypophosphit wasserfrei CAS No. 7681-53-0 (Sigma Aldrich, extra pure) |
| Komponente d) | Melamincyanurat, [CAS Nr. 37640-57-6] (Melapur® MC25, der Fa. BASF, Ludwigshafen, Deutschland) |
| Komponente g1) | Lowinox® HD 98, 3,3'-Bis(3,5-di-tert-butyl-4-hydroxyphenyl)-N,N'-hexamethylendipropionamid [CAS Nr. 23128-74-7] |
| Komponente g2) | Kombination von oben unter Komponente g) beschriebenen handelsüblichen Entformungs- und Nukleierungsmitteln |
| Komponente g3) | Kombination von oben unter Komponente f) beschriebenen handelsüblichen Farbmitteln zur Einstellung der Farbe RAL2010 |
| Komponente x) | Schlagzähmodifikator auf Basis eines Maleinsäureanhydridgepropften Ethylen-Propylen Kautschuks [CAS Nr. 308064-91-7] (Exxelor® VA1801, Exxon Mobil) |

Art und Menge der handelsüblichen Entformungs-, Nukleierungs- und Farbmittel der Komponenten g2) und g3) sind für Beispiele und Vergleichsbeispiel jeweils gleich.

**Tab. 1:**

| | | Bsp.1 | Vgl. 1 | Vgl.2 |
|---|---|---|---|---|
| Komponente a) | Gew. % | 89,15 | 89,65 | 79,65 |
| Komponente b) | Gew. % | 0,4 | 0 | 0 |
| Komponente c) | Gew. % | 0,1 | 0 | 0 |
| Komponente d) | Gew. % | 8 | 8 | 8 |
| Komponente g1) | Gew. % | 0,5 | 0,5 | 0,5 |
| Komponente g2) | Gew. % | 0,45 | 0,45 | 0,45 |
| Komponente g3) | Gew. % | 1,4 | 1,4 | 1,4 |

(fortgesetzt)

| | | Bsp.1 | Vgl. 1 | Vgl.2 |
|---|---|---|---|---|
| Komponente x) | Gew. % | 0 | 0 | 10 |
| ΔE nach Heißluftalterung 1000 h, 140 °C | ΔE | < 10 | ≥10 | ≥10 |
| Schlagzähigkeit, ISO180-1U, 23°C | $kJ/m^2$ | 76 | 67 | > 75 |
| UL94 @ 0,75mm | Klasse | V-0 | V-0 | V-2 |

Die erfindungsgemäße Kombination von Komponente a), b), c) und d) in Beispiel 1 zeigte mit einem ΔE < 10 nicht nur einen verbesserten Farberhalt bzw. eine verbesserte Farbstabilität nach Heißluftalterung als das Vergleichsbeispiel 1 ohne die Komponenten b) und c), sondern überraschenderweise auch eine verbesserte Schlagzähigkeit gemessen nach **ISO180-1U** bei 23°C. Eine Verbesserung der Schlagzähigkeit gemäß dem Stand der Technik mit Hilfe eines handelsüblichen Schlagzähmodifikators in Vergleichsbeispiel 2 zeigte zwar ebenfalls eine erhöhte Schlagzähigkeit, führt aber zu einer stärkeren Verfärbung nach Heißluftalterung und zu einem Verfehlen der UL94 V-0 Klassifizierung.

## Patentansprüche

1. Zusammensetzungen sowie darauf basierende Erzeugnisse enthaltend

   a) wenigstens ein Polyamid,
   b) wenigstens ein sekundäres aromatisches Amin,
   c) wenigstens ein Phosphinsäurederivat der allgemeinen Formel (I),

   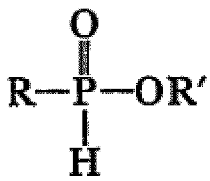
   (I)

   worin R für ein Wasserstoffatom oder für eine Alkyl-, Cycloalkyl- oder Aryl-Gruppe steht, und
   R' für ein Alkalimetall, ein Erdalkalimetall, ein Metall der 12. oder 13. Gruppe des Periodensystems der Elemente, ein Ammonium-Ion oder für eine $C_1$-$C_{10}$ Alkylgruppe steht, und
   d) Melamincyanurat,

   mit der Maßgabe, dass auf 100 Massenanteile der Komponente a)
   0,1 bis 3 Massenanteile, bevorzugt 0,3 bis 2 Massenanteile, besonders bevorzugt 0,35 bis 1.5 Massenanteile der Komponente b),
   0,01 bis 1 Massenanteile, bevorzugt 0,05 bis 0,5 Massenanteile, besonders bevorzugt 0,07 bis 0,4 Massenanteile der Komponente c) und
   2 bis 50 Massenanteile, bevorzugt 4 bis 30 Massenanteile, besonders bevorzugt 5 bis 20 Massenanteile, der Komponente d), eingesetzt werden.

2. Zusammensetzungen sowie darauf basierende Erzeugnisse gemäß Anspruch 1, **dadurch gekennzeichnet, dass** zusätzlich zu den Komponenten a), b), c) und d) noch wenigstens ein von Komponente d) verschiedenes Flammschutzmittel als Komponente e) zu 2 bis 70 Massenanteilen, bevorzugt zu 4 bis 50 Massenanteilen, besonders bevorzugt zu 5 bis 40 Massenanteilen, jeweils bezogen auf 100 Massenanteile der Komponente a), eingesetzt wird.

3. Zusammensetzungen sowie darauf basierende Erzeugnisse gemäß Anspruch 1 oder 2, **dadurch gekennzeichnet, dass** zusätzlich zu den Komponenten a), b), c), d) und e) oder anstelle von e) noch wenigstens einen Füllstoff oder Verstärkungsstoff als Komponente f) zu 1 bis 100 Massenanteilen, bevorzugt zu 5 bis 80 Massenanteilen, besonders bevorzugt zu 15 bis 50 Massenanteilen, jeweils bezogen auf 100 Massenanteile der Komponente a), eingesetzt wird.

4. Zusammensetzungen sowie darauf basierende Erzeugnisse gemäß einem der Ansprüche 1 bis 3, **dadurch ge-**

**kennzeichnet, dass** zusätzlich zu den Komponenten a), b), c), d), e) und f) oder anstelle von e) oder anstelle von f) noch wenigstens ein weiteres, von den Komponenten b), c), d), e) und f) verschiedenes Additiv als Komponente g) zu 0,01 bis 50 Massenanteilen, bevorzugt zu 0,1 bis 30 Massenanteilen, besonders bevorzugt zu 0,2 bis 15 Massenanteilen, jeweils bezogen auf 100 Massenanteile der Komponente a), eingesetzt wird.

**5.** Zusammensetzungen sowie darauf basierende Erzeugnisse gemäß einem oder mehreren der Ansprüche 1 bis 4, **dadurch gekennzeichnet, dass** als Komponente b) ein sekundäres aromatisches Amin der allgemeinen Formel (II) eingesetzt wird

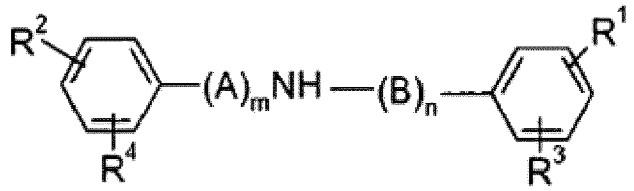

(II),

worin

m und n jeweils unabhängig voneinander für 0 oder 1 stehen,
A und B jeweils unabhängig voneinander für ein mit $C_1$-$C_4$-Alkyl- oder Phenyl-substituiertes tertiäres C-Atom stehen,
$R^1$ und $R^2$ jeweils unabhängig voneinander für Wasserstoff, für eine $C_1$-$C_6$-Alkylgruppe in ortho- und para-Stellung, welche gegebenenfalls durch 1 bis 3 Phenylreste substituiert sein kann, oder für Halogen, Carboxyl oder ein Metallsalze dieser Carboxylgruppe stehen,
$R^3$ und $R^4$ jeweils unabhängig voneinander für Wasserstoff oder für einen Methylrest in ortho- und para-Stellung stehen, oder für eine tertiäre $C_3$-$C_9$-Alkylgruppe in ortho oder para-Stellung stehen, welche gegebenenfalls durch 1 bis 3 Phenylreste substituiert sein kann.

**6.** Zusammensetzungen sowie darauf basierende Erzeugnisse gemäß Anspruch 5, **dadurch gekennzeichnet, dass** die Reste A oder B in Formel (II) jeweils symmetrisch substituierte tertiäre Kohlenstoffatome sind, vorzugsweise dimethylsubstituierte tertiäre Kohlenstoffe oder tertiäre Kohlenstoffe mit 1 bis 2 Phenylgruppen als Substituenten.

**7.** Zusammensetzungen sowie darauf basierende Erzeugnisse gemäß Anspruch 5, **dadurch gekennzeichnet, dass** $R^1$ und $R^2$ in Formel (II) jeweils para t-butyl- oder trimethyl-substituierte quartäre Kohlenstoffatome sind, bei denen die Methylgruppen durch 1 bis 3 Phenylgruppen ersetzt sind, oder $R^1$ und $R^2$ in Formel (II) jeweils für tetramethyl-substituiertes n-Butyl stehen, bei dem die Methylgruppen durch Phenylgruppen ersetzt sind.

**8.** Zusammensetzungen sowie darauf basierende Erzeugnisse gemäß Anspruch 5, **dadurch gekennzeichnet, dass** $R^3$ und $R^4$ für Wasserstoff oder jeweils für ein trimethylsubstituiertes quartäres Kohlenstoffatom in ortho- oder para-Position stehen.

**9.** Zusammensetzungen sowie darauf basierende Erzeugnisse gemäß Anspruch 5, **dadurch gekennzeichnet, dass** als sekundäres aromatisches Amin 4,4'-Bis(a,a-dimethylbenzyl)diphenylamin eingesetzt wird.

**10.** Zusammensetzungen sowie darauf basierende Erzeugnisse gemäß einem oder mehreren der Ansprüche 1 bis 9, **dadurch gekennzeichnet, dass** als Komponente c) Salze der Phosphinsäure eingesetzt werden, wobei es sich auch um Hydrate der Salze handeln kann, vorzugsweise Salze auf Basis von Alkalimetallen, Erdalkalimetallen sowie Metallen der 12. oder 13. Gruppe des Periodensystems.

**11.** Zusammensetzungen sowie darauf basierende Erzeugnisse gemäß Anspruch 10, **dadurch gekennzeichnet, dass** Natriumhypophosphit oder Natriumhypophosphit Monohydrat eingesetzt wird.

**12.** Zusammensetzungen sowie darauf basierende Erzeugnisse gemäß einem oder mehreren der Ansprüche 1 bis 11, **dadurch gekennzeichnet, dass** als Polyamid Polyamid 6 oder Polyamid 66 eingesetzt wird.

**13.** Zusammensetzungen sowie darauf basierende Erzeugnisse gemäß einem oder mehreren der Ansprüche 4 bis 11, **dadurch gekennzeichnet dass** als Komponente g) der Thermostabilisator 3,3'-Bis(3,5-di-tert-butyl-4-hydroxyphenyl)-N,N'-hexamethylendipropionamid eingesetzt wird.

**14.** Verwendung von Mischungen enthaltend als Komponente b) wenigstens ein sekundäres aromatisches Amin und als Komponente c) wenigstens ein Phosphinsäurederivat der allgemeinen Formel (I)

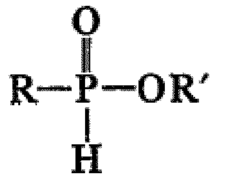

(I)

worin R für ein Wasserstoffatom oder für eine Alkyl-, Cycloalkyl- oder Aryl-Gruppe steht, und R' für ein Alkalimetall, ein Erdalkalimetall, ein Metall der 12. oder 13. Gruppe des Periodensystems der Elemente, ein Ammonium-Ion oder für eine $C_1$-$C_{10}$ Alkylgruppe steht,
zur Herstellung von mit Melamincyanurat flammwidrig ausgerüsteter Polyamid basierter Erzeugnisse mit der Maßgabe, dass auf 100 Massenanteile wenigstens eines als Komponente a) einzusetzenden Polyamids, vorzugsweise Polyamid 6 oder Polyamid 66,
0,1 bis 3 Massenanteile, bevorzugt 0,3 bis 2 Massenanteile, besonders bevorzugt 0,35 bis 1.5 Massenanteile der Komponente b),
0,01 bis 1 Massenanteile, bevorzugt 0,05 bis 0,5 Massenanteile, besonders bevorzugt 0,07 bis 0,4 Massenanteile der Komponente c), und
2 bis 50 Massenanteile, bevorzugt 4 bis 30 Massenanteile, besonders bevorzugt 5 bis 20 Massenanteile, Melamincyanurat als Komponente d) eingesetzt werden,
wobei eine Verbesserung des Alterungsverhalten in Form eines verbesserten Farberhalts bzw. einer verbesserten Farbstabilität im Vergleich zu mit Melamincyanurat flammwidrig ausgerüsteten Polyamid basierten Erzeugnissen ohne die Kombination der Komponenten b) und c) erzielt wird und eine nach IS0180-1U zu bestimmende Schlagzähigkeit nicht geringer ist, als ein entsprechendes Erzeugnis ohne die Komponente b) und c).

**15.** Verfahren zur Verbesserung des Farberhalts bzw. der Farbstabilität im Vergleich zu mit Melamincyanurat flammwidrig ausgerüsteten Polyamid basierten Erzeugnissen ohne die Kombination der Komponenten b) und c) und einer nach ISO180-1U zu bestimmenden Schlagzähigkeit, die nicht geringer ist, als ein entsprechendes Erzeugnis ohne die Komponente b) und c), **dadurch gekennzeichnet, dass** man Mischungen enthaltend

b) wenigstens ein sekundäres aromatisches Amin und
c) wenigstens ein Phosphinsäurederivat der allgemeinen Formel (I)

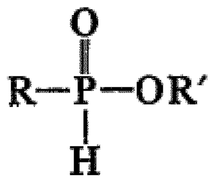

(I)

worin R für ein Wasserstoffatom oder für eine Alkyl-, Cycloalkyl- oder Aryl-Gruppe steht, und R' für ein Alkalimetall, ein Erdalkalimetall, ein Metall der 12. oder 13. Gruppe des Periodensystems der Elemente, ein Ammonium-Ion oder für eine $C_1$-$C_{10}$ Alkylgruppe steht,

in mit Melamincyanurat flammwidrig ausgerüsteten Polyamid basierten Erzeugnissen einsetzt mit der Maßgabe, dass man auf 100 Massenanteile wenigstens eines als der Komponente a) einzusetzenden Polyamids, vorzugsweise Polyamid 6 oder Polyamid 66,
0,1 bis 3 Massenanteile, bevorzugt 0,3 bis 2 Massenanteile, besonders bevorzugt 0,35 bis 1.5 Massenanteile der Komponente b),
0,01 bis 1 Massenanteile, bevorzugt 0,05 bis 0,5 Massenanteile, besonders bevorzugt 0,07 bis 0,4 Massenanteile

der Komponente c) und
2 bis 50 Massenanteile, bevorzugt 4 bis 30 Massenanteile, besonders bevorzugt 5 bis 20 Massenanteile, Melamincyanurat als Komponente d) einsetzt.

Europäisches Patentamt
European Patent Office
Office européen des brevets

# EUROPÄISCHER RECHERCHENBERICHT

Nummer der Anmeldung
EP 21 17 2195

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | JP H11 106644 A (ASAHI CHEMICAL IND) 20. April 1999 (1999-04-20) * Absatz [0001] * * Ansprüche 1, 2 * * Beispiel 1 * * Tabelle 1 * ----- | 1-15 | INV. C08L77/02 C08K3/32 C08K5/18 C08K5/3492 C08K5/5313 C08L77/06 |
| Y | JP 2014 012773 A (ASAHI KASEI CHEMICALS CORP) 23. Januar 2014 (2014-01-23) * Absatz [0001] - Absatz [0016] * * Beispiel 1 * * Tabelle 1 * * Absatz [0142] * * Absatz [0192] * ----- | 1-15 | |
| Y | US 6 518 341 B1 (HURLEY JAMES M [US] ET AL) 11. Februar 2003 (2003-02-11) * Spalte 1, Zeile 9 - Zeile 20 * * Anspruch 1 * * Spalte 9, Zeile 66 - Spalte 10, Zeile 22 * ----- | 1-15 | |

RECHERCHIERTE SACHGEBIETE (IPC)
C08L
C08K

Der vorliegende Recherchenbericht wurde für alle Patentansprüche erstellt

1

| Recherchenort | Abschlußdatum der Recherche | Prüfer |
|---|---|---|
| München | 15. Oktober 2021 | Laudi, Ines |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

# ANHANG ZUM EUROPÄISCHEN RECHERCHENBERICHT ÜBER DIE EUROPÄISCHE PATENTANMELDUNG NR.

EP 21 17 2195

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-10-2021

| Im Recherchenbericht angeführtes Patentdokument | Datum der Veröffentlichung | Mitglied(er) der Patentfamilie | Datum der Veröffentlichung |
|---|---|---|---|
| JP H11106644 A | 20-04-1999 | JP 4059961 B2 | 12-03-2008 |
| | | JP H11106644 A | 20-04-1999 |
| JP 2014012773 A | 23-01-2014 | JP 6035066 B2 | 30-11-2016 |
| | | JP 2014012773 A | 23-01-2014 |
| US 6518341 B1 | 11-02-2003 | AT 255619 T | 15-12-2003 |
| | | AU 5612300 A | 09-01-2001 |
| | | CA 2377494 A1 | 28-12-2000 |
| | | DE 60006968 T2 | 21-10-2004 |
| | | EP 1198520 A1 | 24-04-2002 |
| | | ES 2211563 T3 | 16-07-2004 |
| | | JP 4683802 B2 | 18-05-2011 |
| | | JP 2003503534 A | 28-01-2003 |
| | | JP 2011012283 A | 20-01-2011 |
| | | US 6518341 B1 | 11-02-2003 |
| | | WO 0078869 A1 | 28-12-2000 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- JP H11106644 A
- JP 2014012773 A
- US 6518341 B1
- WO 2005033185 A1
- DE 4236122 A
- WO 2013083247 A1
- EP 0113229 B1
- WO 2009003976 A1


### In der Beschreibung aufgeführte Nicht-Patentliteratur


- Kunststoffhandbuch 3/4, Technische Thermoplaste, Polyamide. Karl Hanser Verlag, 1998, S.16, , S. 148-150
- **S. MOLL.** Untersuchung der Auswirkungen einer thermisch-oxidativen Beanspruchung auf das Emissionsverhalten von ABS und PP und der Korrelation mit dem Alterungsgrad. *Dissertation,* 2016
- **P.H. SEIDEN.** Glasfaserverstärkte Kunststoffe. Springer-Verlag, 1967, 324-325
- Test for Flammability of Plastic Materials for Parts in Devices and Appliances. Standard of Safety. Underwriters Laboratories Inc, 1998, 14-18
- *CHEMICAL ABSTRACTS,* 25038-54-4
- *CHEMICAL ABSTRACTS,* 32131-17-2
- *CHEMICAL ABSTRACTS,* 10081-67-1
- *CHEMICAL ABSTRACTS,* 7681-53-0
- *CHEMICAL ABSTRACTS,* 10039-56-2
- *CHEMICAL ABSTRACTS,* 37640-57-6
- *CHEMICAL ABSTRACTS,* 1309-42-8
- *CHEMICAL ABSTRACTS,* 1078142-02-5
- *CHEMICAL ABSTRACTS,* 71449-76-8
- *CHEMICAL ABSTRACTS,* 156024-71-4
- *CHEMICAL ABSTRACTS,* 7440-44-0
- *CHEMICAL ABSTRACTS,* 65997-17-3
- *CHEMICAL ABSTRACTS,* 7631-86-9
- *CHEMICAL ABSTRACTS,* 14808-60-7
- *CHEMICAL ABSTRACTS,* 1344-95-2
- *CHEMICAL ABSTRACTS,* 10101-39-0
- *CHEMICAL ABSTRACTS,* 546-93-0
- *CHEMICAL ABSTRACTS,* 1332-58-7
- *CHEMICAL ABSTRACTS,* 92704-41-1
- *CHEMICAL ABSTRACTS,* 1317-65-3
- *CHEMICAL ABSTRACTS,* 1302-76-7
- *CHEMICAL ABSTRACTS,* 1318-94-1
- *CHEMICAL ABSTRACTS,* 12251-00-2
- *CHEMICAL ABSTRACTS,* 7727-43-7
- *CHEMICAL ABSTRACTS,* 68476-25-5
- *CHEMICAL ABSTRACTS,* 13983-17-0
- *CHEMICAL ABSTRACTS,* 67479-91-8
- *CHEMICAL ABSTRACTS,* 12125-28-9
- *CHEMICAL ABSTRACTS,* 37244-96-5
- *CHEMICAL ABSTRACTS,* 14807-96-6
- Chemie Ingenieur Technik. Wiley-VCH Verlags GmbH, 2000, vol. 72, 273-276
- *CHEMICAL ABSTRACTS,* 23128-74-7
- *CHEMICAL ABSTRACTS,* 7681-65-4
- *CHEMICAL ABSTRACTS,* 47107-74-4
- *CHEMICAL ABSTRACTS,* 14059-33-7
- *CHEMICAL ABSTRACTS,* 1309-37-1
- *CHEMICAL ABSTRACTS,* 13463-67-7
- *CHEMICAL ABSTRACTS,* 1317-70-0
- *CHEMICAL ABSTRACTS,* 1314-98-3
- *CHEMICAL ABSTRACTS,* 12014-93-6
- *CHEMICAL ABSTRACTS,* 12031-49-1
- *CHEMICAL ABSTRACTS,* 923954-49-8
- *CHEMICAL ABSTRACTS,* 2170864-77-2
- *CHEMICAL ABSTRACTS,* 817181-98-9
- *CHEMICAL ABSTRACTS,* 42844-93-9
- *CHEMICAL ABSTRACTS,* 72102-84-2
- *CHEMICAL ABSTRACTS,* 56279-27-7
- *CHEMICAL ABSTRACTS,* 13676-91-0
- *CHEMICAL ABSTRACTS,* 203576-97-0
- *CHEMICAL ABSTRACTS,* 6925-69-5
- *CHEMICAL ABSTRACTS,* 98460-24-3
- *CHEMICAL ABSTRACTS,* 8013-07-8
- *CHEMICAL ABSTRACTS,* 115-83-3
- *CHEMICAL ABSTRACTS,* 1592-23-0
- *CHEMICAL ABSTRACTS,* 110-30-5
- Kunststoff-Handbuch 3/4, Polyamide. Carl Hanser Verlag, 1998, 374-384
- Test for Flammability of Plastic Materials for Parts in Devices and Appliances. Standard of Safety. Underwriters Laboratories Inc, 1998, S. 14-S. 18
- *CHEMICAL ABSTRACTS,* 308064-91-7